# EUROPEAN PATENT SPECIFICATION

(11) **EP 3 075 559 B1**
(45) Date of publication and mention of the grant of the patent: **30.01.2019**
(21) Application number: 13898278.0
(22) Date of filing: 28.11.2013
(51) Int. Cl.: B41M 5/26, B32B 9/00, B32B 27/36, B42D 25/24, B42D 25/41

(54) **TRANSPARENT LASER MARKING SHEET, LAMINATE, AND METHOD FOR LASER MARKING**
TRANSPARENTE LASERMARKIERUNGSFOLIE, LAMINAT UND VERFAHREN ZUR LASERMARKIERUNG
FEUILLE TRANSPARENTE DE MARQUAGE AU LASER, STRATIFIÉ, ET PROCÉDÉ POUR MARQUAGE AU LASER

(43) Date of publication of application: 05.10.2016
(73) Proprietor: Mitsubishi Chemical Corporation, Tokyo 100-8251 (JP)
(72) Inventor: SAKAGAMI, Toshinori, Yokkaichi-shi Mie 510-0883 (JP); HASHIMOTO, Akira, Yokkaichi-shi Mie 510-0883 (JP); WATANABE, Takashi, Yokkaichi-shi Mie 510-0883 (JP)
(74) Representative: TBK
(86) International application number: PCT/JP2013/082106
(87) International publication number: WO 2015/079541

(56) References cited:
- EP-A1- 2 181 858
- WO-A1-2009/145060
- WO-A1-2011/043087
- WO-A1-2013/058374
- JP-A- 2000 154 365
- JP-A- 2002 141 731
- JP-A- 2007 223 114
- JP-A- 2011 025 461
- JP-A- 2013 001 087
- JP-A- 2013 240 885

## Description

### Technical Field

The present invention relates to a transparent laser-marking sheet, a laminate and a method for laser marking.

### Background Art

While the movement of human resources has been activated lately in the midst of ongoing international exchanges, an identification, such as an ID card or a passport with personal information recorded thereon is used as means to identify an individual and verify the identity. In particular, the importance of an identification issued from an official body or a reliable organization has been growing.

Meanwhile, since the September, 2001 terrorist attacks, countermeasures have been taken in each country, such as to tighten up immigration and departure control of the country. For instance, ICAO (International Civil Aviation Organization), which is a specialized agency of the United Nations, established a standard, and the work for introducing such a standard into electronic passports has been started in various countries. For this work, it is important to inhibit forgery, and to this end, a technique of laser-marking personal names, symbols, letters, photographs and the like has been drawing attention.

Then, since such an electronic passport can identify an individual and verify the identity, if personal information can be easily falsified or faked by a third party other than a country (or an agent on behalf of a country), the reliability on the identification deteriorates. This may lead to a problem for the development of international exchanges or the worldwide movement of human resources.

Therefore, how to inhibit falsification and forgery in the aforementioned electronic passport is an important challenge. Since an electronic passport has a light, thin, short and small standard, how to clearly indicate personal names, symbols, letters, photographs and the like with high contrasts is important. Especially, since realization of clear indication with high contrasts leads to previous inhibition of falsification and forgery as well, the market expectation therefor is great.

For such problems, attention is paid to a technique of laser-marking personal names, symbols, letters, photographs and the like, specifically, to a laser-marking sheet, and there are the following Patent Documents 1 and 2, for example.

Patent Document 1 discloses a technique relating to the manufacturing of a flexible data sheet in a security document, such as a passport. Specifically, the technique relates to a data sheet in a security document including a data portion and an attachment portion. The data portion includes a data area in which at least some of the data on the data sheet can be recorded utilizing laser inscription technique. The attachment portion is configured to be flexible and have bending resistant in order to fasten the data sheet to the security document.

Patent Document 2 discloses a technique relating to a laser-marking multilayer sheet used for an electronic passport and to an electronic passport including the multilayer sheet. Specifically, a laser-marking multilayer sheet in the technique of Patent Document 2 is configured as a laser-marking multilayer sheet for an electronic passport obtained by stacking five layers of a multilayer sheet A/a multilayer sheet B/a film C/a multilayer sheet B/a multilayer sheet A. Each multilayer sheet A is a transparent laser-marking multilayer sheet having skin layers and a core layer and made of at least three-layer sheets. Each multilayer sheet B is a colored laser-marking multilayer sheet having skin layers and a core layer and made of at least three layers of sheets. The film C is a resin film or a film made of cloth.

### Citation List

### Patent Documents

[Patent Document 1] JP-A-2006-527670
[Patent Document 2] JP-A-2009-279906

WO2013058374 discloses a transparent laser-marking sheet comprising an adhesive layer on at least one of faces of a base-material sheet, wherein the base-material sheet is configured as a single-layer sheet made of a transparent polycarbonate resin composition including polycarbonate resin and laser-light energy absorbing agent, or the base-material sheet is configured as a multilayer sheet having skin layers and a core layer, the skin layers as both of outermost layers being made of a thermoplastic resin composition including noncrystalline polyester resin, and the core layer being made of a transparent polycarbonate resin composition including polycarbonate resin and laser-light energy absorbing agent.

### Summary of the Invention

### Problem to be Solved by the Invention

In the technique of Patent Document 1, two sheets are partly separated from one of the sheets, and adhesive is applied at a part between the two sheets, in which attachment is placed, followed by the lamination at a high temperature to form the data sheet. Patent Document 1 discloses another data sheet as well, including a filling layer disposed between two sheets and made of the same material as that of the sheets.

Such a technique of Patent Document 1, however, simply obtains the lamination of a sheet printed by a laser inscription technique. That is, this technique cannot achieve the effect of sufficient integration between the printed sheet by a laser inscription technique and another sheet printed by a different method.

For instance, a sheet printed by UV offset printing or UV silk printing and a sheet printed by a laser inscription technique may be combined for use as a data sheet, which is effective in terms of the design and forgery inhibition. On the contrary, it is important for such combination to integrate the sheets that are printed by different methods as stated above. In this respect, in the technique of Patent Document 1, if lamination or the like is performed with a UV offset printed sheet or a UV silk printed sheet, such lamination will lead to easy delamination, meaning a failure in integration.

Further, Patent Document 1 is configured so that one of the sheets is separated partly. Therefore, this technique is not suitable for countermeasure against forgery by combining a plurality of sheets to make a complicated design, for example.

In the technique of Patent Document 2, the sheets are integrated by heating or pressing. Therefore the laminate as the combination of a sheet subjected laser-marking and a printed sheet by UV offset printing or UV silk printing has to be improved for the bonding in terms of reliable integration. This is because it is important for the sheets so as not to generate a problem, such as peeling, to inhibit falsification, forgery or the like.

The technique of Patent Document 2 has to be improved in the versatility or the forming workability as well. When the sheet is used for an ID card or a passport as an identification card, an official body or a reliable organization often processes data finally. In such a case, the configuration that can be handled easily is preferable.

The present invention has been made in order to solve the aforementioned problems and aims to provide an excellent transparent laser-marking sheet that has thermal adhesiveness, adhesiveness, and transparency, such a laminate, and such a method for laser-marking.

A transparent laser-marking sheet of the present invention has favorable adhesiveness between a base-material sheet and a transparent thermal activation adhesive, is versatile and has good forming workability.

A laminate of the present invention, which includes at least a printed sheet bonded to the adhesive layer of the transparent laser-marking sheet of the present invention, can realize clear display, such as printing by laser marking, printing by UV offset printing or printing by UV silk printing, and is excellent in inhibiting falsification, forgery or the like.

### Means for Solving the Problem

The present invention provides the following transparent laser-marking sheet, laminate, and laser-marking method.
[1] A transparent laser-marking sheet including an adhesive layer on at least one of faces of a base-material sheet, wherein the base-material sheet is configured as a single-layer sheet made of a transparent polycarbonate resin composition including polycarbonate resin and laser-light energy absorbing agent, or the base-material sheet is configured as a multilayer sheet having skin layers and a core layer, the skin layers as both of outermost layers being made of a thermoplastic resin composition including noncrystalline polyester resin, and the core layer being made of a transparent polycarbonate resin composition including polycarbonate resin and laser-light energy absorbing agent, and the adhesive layer is made of transparent thermal activation adhesive made of polyester resin obtained by copolymerizing a monomer having a hydrophilic functional group and is configured as a layer of 1 to 20 µm in thickness.
[2] The transparent laser-marking sheet according to [1], wherein the polyester resin of the transparent thermal activation adhesive has number average molecular weight of 10,000 to 200,000 and has a glass-transition temperature of 20 to 100°C.
[3] The transparent laser-marking sheet according to [1] or [2], wherein the polyester resin of the transparent thermal activation adhesive includes water-dispersed polyester resin including a copolymer of polyester resin and a monomer having a hydrophilic functional group.
[4] The transparent laser-marking sheet according to any one of [1] to [3], wherein the transparent thermal activation adhesive includes aqueous dispersion, aqueous solution or organic solvent solution.
[5] The transparent laser-marking sheet according to any one of [1] to [4], wherein the single-layer sheet or the core layer of the multilayer sheet includes, as the laser-light energy absorbing agent, at least one type selected from carbon black, titanium black, metal oxides, , metal oxalates and metal carbonates.
[6] The transparent laser-marking sheet according to any one of [1] to [5], wherein the single-layer sheet includes lubricant, as well as at least one type selected from antioxidant and anticolorant, and at least one type selected from UV absorbing agent and light stabilizer.
[7] The transparent laser-marking sheet according to any one of [1] to [5], wherein the skin layers of the multilayer sheet include lubricant, as well as at least one type selected from antioxidant and anticolorant, and at least one type selected from UV absorbing agent and light stabilizer.
[8] The transparent laser-marking sheet according to any one of [1] to [7], wherein the transparent laser-marking sheet is used for electronic passport.
[9] The transparent laser-marking sheet according to any one of [1] to [7], wherein the transparent laser-marking sheet is used for plastic card.
[10] A laminate including the transparent laser-marking sheet according to any one of [1] to [7], wherein to the adhesive layer of the transparent laser-marking sheet, at least a printed sheet is bonded, and the printed sheet is UV offset printed or UV silk printed.
[11] A laser-marking method for laser-marking to the transparent laser-marking sheet according to any one of [1] to [9], wherein after integrating the transparent laser-marking sheet and a printed sheet subjected to UV offset printing or UV silk printing, laser-light energy is applied to a face of the transparent laser-marking sheet where the adhesive layer is not formed, so as to laser-mark letters, figures, symbols or information.

### Effect of the Invention

The transparent laser-marking sheet of the present invention has good adhesiveness between the base-material sheet and the transparent thermal activation adhesive, is versatile and has good forming workability.

Further the transparent laser-marking sheet of the present invention has excellent transparency, and letters, images, and the like printed on the printed sheet that is bonded to the adhesive layer face of the this transparent laser-marking sheet can be clearly viewed.

Further the transparent laser-marking sheet of the present invention has very excellent thermal adhesiveness with another sheet making up an electronic passport or a plastic card, for example, as well other than the sheet subjected to printing.

Further the transparent laser-marking sheet of the present invention enables clear laser-marking with high contrast by application of laser-light energy. Foaming does not occur at the portion irradiated with the laser-light energy. Etching at the laser-marking section does not occur, and the sheet has wear resistance.

The laminate of the present invention, which includes at least a printed sheet bonded to the adhesive layer of the transparent laser-marking sheet of the present invention, can realize clear display, such as printing by laser marking and printing by UV offset printing or printing by UV silk printing, or is excellent in inhibiting falsification, forgery or the like. Additionally, the laminate including the transparent laser-marking sheet and a sheet subjected to UV offset printing or UV silk printing is very excellent in thermal adhesiveness (bonding effect) between the transparent laser-marking sheet and the sheet subjected to the printing.

According to the laser-marking method of the present invention, a transparent laser-marking sheet and a printed sheet can be integrated by thermal-fusion reliably, and clear letters, figures, symbols or information can be laser-marked on the transparent laser-marking sheet easily and with high contrast.

### Brief Description of the Drawings

Fig. 1 schematically shows one embodiment of a transparent laser-marking sheet of the present invention, showing a cross section of the transparent laser-marking sheet provided with a layer of transparent thermal activation adhesive on one of the faces of a base-material sheet made up of a single layer.
Fig. 2 schematically shows another embodiment of the transparent laser-marking sheet of the present invention, showing a cross section of the transparent laser-marking sheet, provided with a layer of transparent thermal activation adhesive on one of the faces of a base-material sheet made up of a multilayer sheet having skin layers and a core layer.
Fig. 3 is a schematic cross-sectional view showing one embodiment of a laminate including the transparent laser-marking sheet of the present invention.
Fig. 4 is a schematic cross-sectional view showing another embodiment of the laminate including the transparent laser-marking sheet of the present invention.
Fig. 5 is a schematic cross-sectional view showing still another embodiment of the laminate including the transparent laser-marking sheet of the present invention.

### Mode for Carrying out the Invention

Hereinafter, modes for carrying out a transparent laser-marking sheet, a laminate, and a method for laser-marking of the present invention are described specifically. The present invention widely includes a transparent laser-marking sheet, a laminate, and a method for laser-marking including the invention-specifying matters and is not limited to the following embodiments.

### [I] Structure of transparent laser-marking sheet of the present invention:

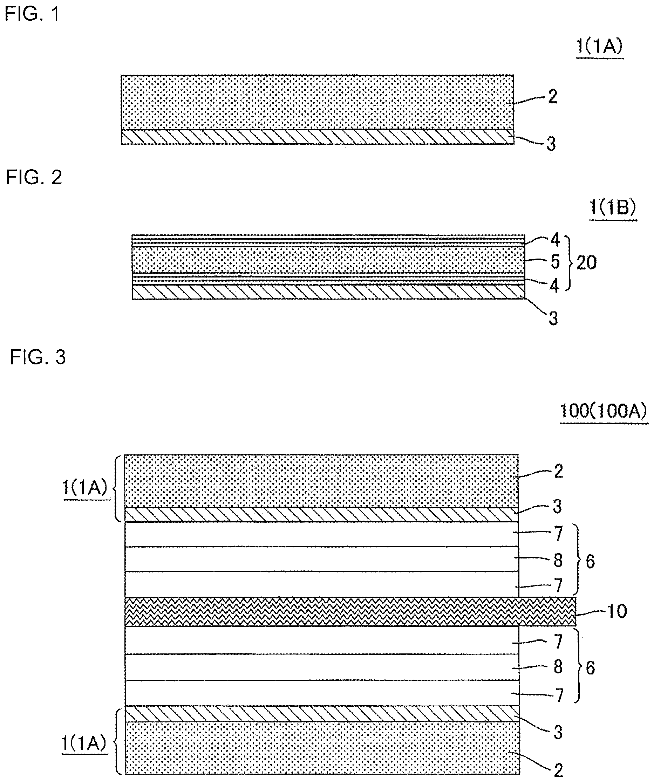

As shown in Figs. 1 and 2, a transparent laser-marking sheet 1 (1A, 1B) of the present invention is a transparent laser-marking sheet including an adhesive layer 3 disposed on at least one of the faces of a base-material sheets 2 or 20. The base-material sheet 2 is configured as a single layer sheet made of a transparent polycarbonate resin composition including polycarbonate resin and laser-light energy absorbing agent. The base-material sheet 20 is configured as a multilayer sheet including skin layers 4 and a core layer 5, and the skin layers 4 as the outermost layers are made of a thermoplastic resin composition containing noncrystalline polyester resin, and the core layer 5 is made of a transparent polycarbonate resin composition including polycarbonate resin and laser-light energy absorbing agent. Then, the adhesive layer 3 is configured as a layer made of transparent thermal activation adhesive made of polyester resin and having a thickness of 1 to 20 µm.

In the following, the adhesive layer is described first, and then the single-layer sheet and the multilayer sheet are described in this order.

### [I-1] Adhesive layer:

The adhesive layer of the present invention is formed as a layer on at least one of the faces of the base-material sheet. The adhesive layer is made of transparent thermal activation adhesive made of polyester resin, and is configured as a layer of 1 to 20 µm in thickness. With this configuration, the versatility and forming workability thereof can be improved. Especially such a layer is easily integrated with another sheet subjected to printing by UV offset printing or UV silk printing, whereby the effect of inhibiting falsification, forgery or the like can be improved.

Herein, the "adhesive layer" that is "formed as a layer on at least one of the faces of the base-material sheet" refers to that the adhesive layer is formed on at least one of the faces of the base-material sheet and as a layer on the face as a whole. With this configuration, the base-material sheet and the other sheet can be integrated reliably. That is, after integrating the transparent layer-marking sheet of the present invention and the other sheet, a problem such as peeling can be suppressed. In other words, the sheet can be brought into intimate contact with the other sheet so as to be combined with the other sheet in an integrated manner, whereby the effect of inhibiting falsification, forgery or the like can be obtained.

Especially even when the other sheet has a surface subjected to printing by UV offset printing or UV silk printing, the sheets can be integrated reliably, and a problem such as peeling can be suppressed. Accordingly the effect of inhibiting falsification, forgery or the like can be obtained.

On the contrary, it is not favorable that an adhesive layer is formed partially on at least one of the faces of the base-material sheet, because such a layer may cause a problem in integration with the sheet subjected to printing by UV offset printing or UV silk printing.

The adhesive layer is made of transparent thermal activation adhesive made of polyester resin. Since the adhesive layer is made of such a material, the bonding effect with the other sheet or the like can be improved. Further, since the adhesive layer formed has excellent transparency, letters, images, and the like printed on the other sheet that is bonded to this transparent laser-marking sheet can be clearly viewed.

The above-stated "transparent thermal activation adhesive made of polyester resin" is adhesive that has a property of showing or increasing the bonding effect by heating, which makes the adhesive layer transparent when the adhesive layer is formed using this adhesive on the base-material sheet. Examples of such "transparent thermal activation adhesive" include polyester resin.

Herein the adhesive to form the adhesive layer in the transparent laser-marking sheet of the present invention has a thermal activation property as stated above. If adhesive without a thermal activation property is used as the adhesive to form the adhesive layer in the present invention, such adhesive without a thermal activation property shows the bonding effect at ambient temperatures, meaning poor workability for punching, for example, unfavorably. Further, such adhesive leads to difficulty in alignment during forming as well, dust will easily adhere to the adhesive-layer forming face during forming, and has poor forming workability. Moreover, such adhesive without a thermal activation property typically has a relatively low glass-transition temperature, and therefore it has a problem, such as difficulty in increasing thermal resistance.

The "adhesive layer" is formed as stated above to improve the versatility and the forming workability. If adhesive is applied during integration of the base-material sheet of the present invention and the other sheet, the working efficiency will deteriorate. In such a case, the amount, the thickness or the like of the adhesive applied may not be uniform, which may lead to variations in the final products. Further, when an official body or a reliable organization performs printing of data or the like as in the transparent laser-marking sheet or the laminate of the present invention, it is practically difficult for them to apply the adhesive of desired amount to be a desired thickness.

The adhesive layer in the transparent laser-marking sheet of the present invention is configured as a layer of 1 to 20 µm in thickness. Such a desired thickness of the layer does not make the adhesive layer too thick, and so it can match with general standards for electronic passports or plastic carts. That is, an electronic passport or a plastic card can be easily formed using the transparent laser-marking sheet including such a desired adhesive layer. Further, such a desired thickness of the adhesive layer can keep the clarity of letters, figures, symbols, information or the like when they are laser-marked or printed.

On the contrary, if the thickness of the adhesive layer is less than 1 µm, sufficient adhesion with the other sheet cannot be achieved. That is, when the sheet is bonded with the other sheet, they will be easily peeled off or peeling will occur easily. Therefore, the effect of inhibiting falsification, forgery or the like cannot be obtained. If the thickness of the adhesive layer exceeds 20 µm, the adhesive layer is too thick. For such a too thick adhesive layer, it is difficult to obtain the adhesive strength corresponding to such a thickness. Further, it is difficult to use such a too thick adhesive layer for an electronic passport or a plastic card. This is because such a thickness has difficulty in matching with the general standards for thickness required of electronic passports or plastic cards. As a result, if such a too thick adhesive layer is formed, the versatility of the transparent laser-marking sheet will be poor.

Such a too thick adhesive layer further leads to a problem during integration between the transparent laser-marking sheet and the other sheet. For instance, the transparent laser-marking sheet and the other sheet are heated or are heated and pressed for stacking and integration, the adhesive forming the adhesive layer in a solid state may stick out from the end face of the laminate. Such sticking-out adhesive causes damage in appearance, and requires the removal thereof at the same time, thus degrading the productivity. Moreover, since the adhesive layer is too thick, it will be difficult to read data such as letters printed on the other sheet from the side of the transparent laser-marking sheet.

For the "transparent thermal activation adhesive made of polyester resin", adhesive that shows a thermal activation property at temperatures of 60 to 160°C is preferably used. Such adhesive can be easily stored and handled, and does not have the risk of causing damage to the other sheet that is to be bonded to the adhesive layer. On the contrary, if the adhesive shows a thermal activation property at temperatures less than 60°C, it is difficult to store and handle such adhesive unfavorably. If the temperature exceeds 160°C, thermal energy required during bonding increases, and energy loss correspondingly increases, meaning an increase in production cost. Further, the base-material sheet may be damaged, or the other sheet to be bonded with the adhesive layer also may be damaged more often.

The adhesive layer preferably has whole beam transmittance of 70% or more. This is for enabling recognition of letters, figures, symbols, information or the like printed on the other sheet, for example, when the transparent laser-marking sheet and the other sheet or the like are integrated for use. The details and the method for measuring of the "whole beam transmittance" as stated above are described later.

The polyester resin of the transparent thermal activation adhesive preferably has number average molecular weight of 10,000 to 200,000 and has a glass-transition temperature of 20 to 100°C. An adhesive layer made of such desired polyester resin formed enables the transparent laser-marking sheet of the present invention and the other sheet to be bonded reliably. That is, a problem such as peeling hardly occurs, and falsification, forgery and the like can be inhibited. Further, this can suppress stickiness or adhesion at the surface of the adhesive layer in the state of ambient temperatures, i.e., before forming to heat the resin at a desired temperature, and therefore the handling thereof becomes easy and the forming can be performed easily. Therefore, the sheet can be easily used for electronic passports, plastic cards and the like.

On the contrary, if the number average molecular weight of the "polyester resin of the transparent thermal activation adhesive" is less than 10,000, the adhesion strength thereof deteriorates. This may result in a problem such as peeling. If the number average molecular weight of the "polyester resin of the transparent thermal activation adhesive" exceeds 200,000, a large amount of solvent will be necessary for use to be solved in the solvent for adjustment to have desired viscosity. Therefore this is not favorable in terms of workability, environment and cost.

If the glass-transition temperature of the "polyester resin of the transparent thermal activation adhesive" is less than 20°C, stickiness or adhesion may occur at the adhesive layer at ambient temperatures. As a result, the working efficiency will deteriorate. If the glass-transition temperature of the "polyester resin of the transparent thermal activation adhesive" exceeds 100°C, a problem may occur during forming and integration of the transparent laser-marking sheet and the other sheet.

Such polyester resin of the transparent thermal activation adhesive may be synthesized from terephthalic acid and ethyleneglycol, for example. Among these polyester resins, polyester resin obtained by copolymerizing a monomer having hydrophilic functional group is used as transparent thermal activation adhesive in the transparent laser-marking sheet of the invention. As the polyester resin of the transparent thermal activation adhesive, water-dispersed polyester resin including a copolymer with a monomer having a hydrophilic functional group is preferable. An adhesive layer that is made of such desired polyester resin allows a formed transparent laser-marking sheet to have strong bonding effect with the other sheet.

Examples of the hydrophilic functional group as stated above include a hydroxyl group, an amino group, a carboxyl group, a sulfonate group, and a quaternary ammonium base. Examples of the monomer having a hydrophilic functional group include glycols and acrylic acids.

For the blend amount of a monomer having a hydrophilic functional group as stated above, the contained amount of the hydrophilic functional group is 60 mass% or less to 100 parts by mass of the polyester resin, preferably 50 mass% or less. Polyester resin having a hydrophilic functional group of such an amount has both of water dispersible property and water resistance. Therefore, the resin can be easily aqueous. That is, it can be of a non-solvent type. Therefore VOC regulations or the like can be cleared. Water resistance also may be given to the adhesive layer. If the contained amount of the hydrophilic functional group is too much, the water resistance will deteriorate.

When the adhesive layer is formed using the polyester resin as stated above, the resin can be dispersed easily in water to be aqueous dispersion without using dispersing agent, emulsifying agent or the like. Therefore, the adhesive layer can be formed easily. Further, coating at a desired thickness also can be easily performed. Additionally, the adhesive layer made of the polyester resin as stated above is not solved or hardly soluble in water. It has excellent water resistance as well. Therefore, the layer can be handled easily even under humid working environment.

Specific examples of such polyester resin as the transparent thermal activation adhesive to form an adhesive layer include Vylonal MD-1200 (product name, produced by Toyobo Co., Ltd) and XJ-36 (product name, produced by Toagosei Co., Ltd). These are just examples, and the resins are not limited to them.

The transparent thermal activation adhesive can be used as aqueous dispersion, aqueous solution or organic solvent solution. When the adhesive layer is formed, such adhesive can make the polyester resin as stated above homogeneous, and the adhesive layer can be easily formed as a uniform layer. Among them, the adhesive is used as aqueous dispersion in an ecologically friendly usage form.

The polyester resin as stated above may not include surfactant, or may include a small amount of surfactant even when it includes surfactant, and therefore the adhesiveness, thermal adhesiveness, transparency and the like will be not degraded. Further, stability of the dispersion liquid can be ensured, and so when the adhesive layer is formed on the base-material sheet described later, the layer can be easily formed, and the thickness of the adhesive layer also can be controlled easily.

When the polyester resin of the transparent thermal activation adhesive is used as aqueous dispersion, aqueous solution or organic solvent solution, the copolymer thereof preferably has solid content concentration in the range of 10 to 40 mass%. Such a range can facilitate the formation of a uniform adhesive layer on the base-material sheet. If the solid content concentration is less than 10 mass%, recoating will be required to form a layer of a thickness as stated above, meaning an increase in man-hour. Conversely if the solid content concentration exceeds 40 mass%, it is difficult to form a layer of a uniform thickness.

Examples of organic solvent to solve such transparent thermal activation adhesive for use include cellosolve-based solvents such as methyl cellosolve, ethyl cellosolve and buthyl cellosolve, and keton-based solvents such as cyclohexanone. The organic solvent is not limited to them, which may be an organic solvent including known hydrocarbon-based solvent.

When aqueous dispersion, aqueous solution or organic solvent solution of the polyester resin as the transparent thermal activation adhesive as stated above is prepared, various types of preparation methods and means that have been used conventionally can be used. There is no limitation in the method for preparation or means.

The transparent thermal activation adhesive made of polyester resin to form the adhesive layer may include leveling agent, coloring agent and other additives as required in the range of not degrading the aims and the advantageous effects of the present invention.

### (Method for forming adhesive layer)

As a method for forming the adhesive layer on at least one of the faces of the base-material sheet in the transparent laser-marking sheet of the present invention, a known method for forming may be used. For instance, application liquid that is aqueous dispersion, aqueous solution or solvent solution may be prepared. Next, the thus prepared application liquid is formed like a layer on the base-material sheet by known means to form a layer, such as roll coating, bar coating, spray coating, or air-knife coating. After forming a layer, the layer may be dried to form an adhesive layer.

Temperatures during the drying as stated above preferably are about 60 to 120°C. With such a temperature condition, a layer made of the transparent thermal activation adhesive can be formed rigidly on the base-material sheet. On the contrary, if the drying temperature is less than 60°C, it is difficult to form the transparent thermal activation adhesive layer rigidly on the base-material sheet, and it takes long time for drying, so that the productive efficiency will deteriorate. If the drying temperature exceeds 120°C, voids or cracks may occur in the base-material sheet unfavorably.

Time required for the drying as stated above typically is from a few tens of seconds to a few minutes. Although this drying time depends on the drying temperature, such desired drying time can form a base-material sheet without stickiness and a rigid adhesive layer having excellent adhesiveness with the base-material sheet. On the contrary, if the drying time is too short, the drying temperature has to be increased more than necessary. If the drying temperature is increased more than necessary, voids or cracks may occur in the base-material sheet unfavorably. If the drying time is too long, the production cost will be too high. Furthermore, the base-material sheet and the transparent thermal activation adhesive will be exposed to heating for a long time, and so voids or cracks may occur in the base-material sheet similarly to the above. The effect from longer drying time also is hardly expected. Therefore such drying time is not favorable.

For example, a transparent laser-marking sheet 1 (1A) as shown in Fig. 1 may be formed. In the transparent laser-marking sheet 1 (1A) shown in Fig. 1, the base-material sheet is configured as a single-layer sheet 2 described later, on one face of which an adhesive layer 3 is formed.

For another example, a transparent laser-marking sheet 1 (1B) as shown in Fig. 2 may be formed. In the transparent laser-marking sheet 1 (1B) shown in Fig. 2, the base-material sheet is configured as a multilayer sheet 20 described later. This multilayer sheet 20 includes skin layers 4 and a core layer 5. On one of the skin layers 4 of this multilayer sheet 20, an adhesive layer 3 is formed.

### [1-2] Structure of base-material sheet

In the transparent laser-marking sheet of the present invention, the base-material sheet is configured as a single-layer sheet or as a multilayer sheet. The multilayer sheet is configured as a three-layered sheet including at least skin layers and a core layer.

### (Single-layer sheet)

A single-layer sheet is configured as a sheet of a single-layer structure. This single-layer sheet can be manufactured by a conventionally known method for forming a sheet-like object. Note here that a single-layer sheet is preferably formed by melt extrusion.

### (Materials of single-layer sheet)

A single-layer sheet as the base-material sheet is preferably made of the following materials.

The single-layer sheet is preferably made of transparent resin including transparent polycarbonate resin as a main component. Although the polycarbonate resin as stated above is not limited especially, resin having a melt volume rate of 4 to 20 cm³/10 min. can be used preferably. If the melt volume rate is less than 4 cm³/10 min., this is meaningful because the flexibility and the toughness such as strength and robustness of the sheet are improved. However, the forming workability during melt extrusion will be poor and so has difficulty in actual use unfavorably. If the melt volume rate exceeds 20 cm³/10 min., the toughness of the sheet will be poor unfavorably. In this way, the single-layer sheet is made of a transparent resin layer including polycarbonate resin, whereby so-called "swelling" due to foaming of a laser-marked portion by laser-light energy irradiation can be suppressed, and additionally wear resistance also can be improved, which is due to etching at a laser-marking section when laser-light energy is applied thereto.

When the base-material sheet is configured as a single-layer sheet, it is important that the sheet has a high degree of transparency. Specifically when it is configured as the single-layer sheet, there is no limitation in adding and blending resin that does not inhibit the transparency of the polycarbonate resin, such as filler. In order to improve scratch resistance or thermal resistance, general-purpose polycarbonate resin and special-purpose polycarbonate resin may be blended or polycarbonate resin and polyallylate resin may be blended.

Examples of the special-purpose polycarbonate resin as stated above include graft polymer including polycarbonate resin at the main chain and polystyrene resin or modified acrylonitrile-styrene copolymer resin at the side chain, and an specific example thereof includes "modiper C series" that is a product name produced by NOF Corporation. In this case, the blend ratio is preferably 95/5 to 60/40 (mass ratio). The blend ratio when blending with polyallylate resin also is in the range similar to the above preferably.

### (Multilayer sheet)

The multilayer sheet is formed by stacking a plurality of layers including skin layers and a core layer. That is, in the present embodiment, the base-material sheet is configured as a multilayer sheet of "at least three layers" including skin layers and a core layer. Note here that this "three-layered sheet" means "at least three layers", and is not limited to the three-layered structure. In other words, the "three-layered sheet" in the base-material sheet (multilayer sheet) is used for the purpose of illustration. The "three-layered sheet" means "a sheet made up of at least three layers". It is not intended to limit the multilayer sheet to a sheet made up of "three layers". That is, the multilayer sheet includes five layers, seven layers and any layers of odd numbers more than those as long as it is made of three layers or more.

Even when the multilayer sheet is made up of "any layers of odd numbers more than those" as stated above, if the number of layers is too large, the thickness of one layer of the skin layers and the core layers making up the multilayer sheet is too small. As a result, die sticking may occur in the hot press step during stacking. Therefore, the multilayer sheet preferably is made up of five layers, more preferably three layers.

That is, the reason why the multilayer sheet in the present embodiment is configured of odd-numbered layers as described above is because even in the case of a multilayer sheet of even-numbered layers, when a skin layer or a core layer includes a plurality of layers made up of the same type of layers or different type of layers, these plurality of layers are considered as one layer. As a result, this is always the same configuration as that of a multilayer sheet of odd-numbered layers. Specifically a transparent laser-marking sheet including four layers, for example, has a configuration such as a skin layer/a core layer /a core layer/a skin layer, which is the same configuration as that of a multilayer sheet of odd-numbered layers. In this case, the core layers made up of the same type or different type of two layers (core layer/core layer) is considered as one layer.

For example, in the case of a multilayer sheet including three layers (so-called "three-layered sheet") as an example, two skin layers are disposed on both of the outermost sides (one side and the other side) so that they are arranged as in a skin layer/a core layer/a skin layer. Then, the one core layer is disposed so as to be sandwiched between the two skin layers, thus forming the multilayer sheet. In the case of a multilayer sheet including five layers, two skin layers are disposed on both of the outermost sides (one side and the other side) so that they are arranged as in a skin layer/a core layer/a skin layer/a core layer/a skin layer. In this way, the skin layers and the core layers may be arranged alternately to form a multilayer sheet.

Herein, even the configuration of a single-layer sheet as stated above has sufficient laser color saturation. Preferably, however, a multilayer sheet is formed, including a multilayered structure as stated above. Such a base-material sheet as multilayer sheet having a multilayered structure enables laser light energy irradiation with higher power than in a single-layer sheet, and so can increase density at a laser marking section. Additionally, such a configuration can suppress a so-called "swelling" due to foaming at the laser-marking section, and can maintain the surface smoothness. Furthermore, as compared with the case without the skin layer, such a multilayer configuration including a skin layer stacked above the laser-marking section enables improvement in wear resistance of the laser-marking section.

### (Skin layers in multilayer sheet)

When skin layers are formed in a multilayer sheet, i.e., when a multilayer sheet having a "three-layered structure" is used, the skin layers are configured as both outermost layers disposed on outer sides of the three-layered sheet. These skin layers serve as surface layers as the both outermost layers of the three-layered sheet so as to sandwich the core layer in the multilayer sheet from both end face sides (outer sides).

Herein, the skin layers preferably have the same thickness. For electronic passports or plastic cards, laser marking is typically performed from the surface and the rear face. Therefore, if thicknesses of the skin layers that are disposed and stacked as the outermost surface layer and the lowermost back layer of the base-material sheet as the laminate are different, different effects of suppressing so-called "swelling" because of foaming of the marking in the core layer by laser-light energy irradiation and different effects for resistance to wear at a laser-marking section will be obtained unfavorably.

Further, when the base-material sheet is configured as a multilayer sheet including three layers of a skin layer/a core layer/a skin layer, where the core layer has a thickness of 20% or more and less than 80%, then the skin layers will be 20% or more and less than 80% on both sides. If the thickness of the skin layer on one side is less than 10%, the effects of suppressing so-called "swelling" because of foaming of the laser-marking section in the core layer by laser-light energy irradiation and of improving wear resistance at a laser-marking section are insufficient. On the contrary, too thick skin layers inevitably lead to a thin core layer, thus leading to poor laser markability unfavorably.

### (Materials of skin layers in multilayer sheet)

Herein, the skin layers are made of noncrystalline polyester resin, especially made of a thermoplastic resin composition including noncrystalline aromatic polyester resin as a main component that is prepared from copolymer polyester resin.

Next, as the polyester resin as transparent resin making up the skin layers, which includes noncrystalline aromatic polyester resin as a main component, copolymer polyester resin, which is a polyester composed of a dicarboxylic acid unit having mainly a telephthalate unit, an ethylene glycol unit and a glycol unit having mainly 1,4-cyclohexane dimethanol unit, where the ethylene glycol unit (I) and the 1,4-cyclohexane dimethanol unit (II) has a relationship such that (I)/(II) is 90 to 20/10 to 80 mol%., is used. The reason why the component amounts of the ethylene glycol unit and the 1, 4-cyclohexane dimethanol unit contained in the copolymer polyester resin are adjusted is because the resin obtained with a component amount of the ethylene glycol unit less than 20 mol% in the copolymer polyester resin is not sufficiently non-crystalline to cause recrystallization to proceed in the cooling step after thermal fusion bonding, which degrades thermal adhesiveness. The resin obtained with above 90 mol% is not sufficiently non-crystalline to cause recrystallization to proceed in the cooling step after thermal fusion bonding, which degrades thermal adhesiveness. Therefore, the resin obtained by adjusting the component amounts of the ethylene glycol unit and the 1, 4-cycrohexane dimethanol unit as in the present embodiment can be a desirable resin because the resin can be sufficiently non-crystalline and excellent in thermal adhesiveness.

As an example of this copolymer polyester resin, a substantially noncrystalline aromatic polyester resin (product name "PETG" produced by Eastman Chemical Company) where about 30 mol% of ethylene glycol component in polyethylene telephthalate is substituted by 1, 4-cycrohexane dimethanol is commercially available.

### (Core layer in multilayer sheet)

A core layer in the multilayer sheet is configured as a so-called nucleus layer that is disposed at the center of the base-material sheet. That is, when the base-material sheet is configured as a multilayer sheet that is a three-layered sheet, the core layer is formed as a center layer of the three-layered sheet so as to be sandwiched between the two skin layers disposed on both of the outermost sides.

### (Materials of core layer in multilayer sheet)

That is, the core layer in the multilayer sheet is made of transparent polycarbonate resin composition including transparent polycarbonate resin as a main component. The polycarbonate resin preferably used includes, but not limited to this, resin with a melt volume rate of 4 to 20 cm³/10 min. Resin with a melt volume rate less than 4 cm³/10 min. is meaningful because the flexibility and the toughness such as strength and robustness of the sheet are improved. However, the forming workability during melt extrusion will be poor and so has difficulty in actual use unfavorably. If the melt volume rate exceeds 20 cm³/10 min., the toughness of the sheet will be poor unfavorably. In this way, the core layer in the multilayer sheet is made of a transparent polycarbonate resin composition including polycarbonate resin, whereby so-called "swelling" due to foaming of a laser-marked portion by laser-light energy irradiation can be suppressed, and additionally wear resistance also can be improved, which is due to etching at a marking section when laser-light energy is applied thereto.

### (Thickness of core layer in multilayer sheet)

The core layer in the multilayer sheet is preferably formed to have a ratio of the thickness to the entire sheet of 20% or greater and less than 80%. A thickness ratio of the core layer of 20% or greater increases contrast with an uncolored portion by an original white layer because of a thickness effect of a laser-marking section in the core layer by laser-light energy irradiation, and can improve visibility and clarity of the laser-marking section. On the contrary, a thickness ratio of the core layer of 80% or greater makes the skin layers too thin. When a transparent laser-marking sheet having a base-material sheet made up of such a multilayer sheet is irradiated with laser-light energy of high power, laser-light energy absorbing agent blended in the core layer will absorb the laser-light energy and convert it into heat, so that high heat is generated. This degrades the effect of suppressing a so-called "swelling" at the laser-light energy irradiation section unfavorably. Even if favorable laser color saturation can be obtained by regulating the power of laser-light energy, wear resistance due to etching at the laser-marking section is not sufficient unfavorably as compared with the configuration of the thickness of a skin layer within the aforementioned desired range.

If the core layer has a thickness ratio of 80% or greater, then the skin layers will be relatively thinner because the total thickness including the thickness of the other sheet that is to be stacked on the transparent laser-marking sheet is specified. In this case, even when the skin layers include a lubricant, a problem of die-sticking occurs, where the sheet adheres to a die in a hot press step in the stacking process unfavorably. A thickness ratio of the core layer less than 20% does not cause a problem of the die-sticking in the stacking process because the skin layers are thick. However, such a ratio is not preferable because laser markability is degraded or the sheet generates warpage due to poor thermal resistance. The laser markability also is degraded unfavorably. A preferable thickness of the core layer in the multilayer sheet is 40% or more and less than 75%.

### (Thickness of base-material sheet)

The base-material sheet, in the case of a single-layer sheet, preferably has a thickness of 50 to 200 µm. If the thickness of the single-layer sheet is less than 50 µm, the blend amount of the laser-light energy absorbing agent is too small, and the laser markability is insufficient unfavorably. On the contrary, if the thickness of the single-layer sheet exceeds 200 µm, this is too thick, and therefore actual use is difficult because handling thereof is inconvenient, for example. For instance, when the single-layer sheet exceeding 200 µm and a laser-marking multilayer sheet (laminate) including a multilayer sheet for core that is to be stacked thereon are used for stacking and forming of a multilayer sheet for electronic passport, the total maximum thickness will exceed 800 µm.

When the base-material sheet is configured as a multilayer sheet (so-called three-layered sheet) including skin layers and a core layer, the total thickness of the multilayer sheet is preferably 50 to 200 µm.

When the base-material sheet is configured as a single-layer sheet or a multilayer sheet in this way, the total thickness of the base-material sheet may be set at the aforementioned desired thickness, whereby properties of the transparent laser-marking sheet can be easily realized. Further, in addition to the total thickness of the multilayer sheet as a whole, the ratio of thicknesses of the skin layers and the core layer making up the multilayer sheet to the thickness of the multilayer sheet may be set at the aforementioned desired ratio of the thicknesses, whereby, in combination with the entire thickness of the multilayer sheet within the desired range, can make it easy to improve laser markability.

### (Laser-light energy absorbing agent)

The base-material sheet making up the transparent laser-marking sheet includes laser-light energy absorbing agent. With this configuration, laser color saturation becomes excellent when laser marking, and contrast between the background section and the laser-marking section becomes high, whereby clear letters, figures, symbols or information can be obtained. The "background section" refers to a section where no laser-marking is performed, and the same applies hereafter.

When the base-material sheet is configured as a single-layer sheet, 0.0005 to 1 part by mass of the laser-light energy absorbing agent is included in 100 parts by mass of the transparent resin including polycarbonate resin as a main component preferably. When the base-material sheet is configured as a multilayer sheet, 0.0005 to 1 part by mass of the laser-light energy absorbing agent is included in 100 parts by mass of the transparent polycarbonate resin including polycarbonate resin as a main component in the core layer preferably. In this way, laser-light energy absorbing agent is included, whereby laser color saturation becomes excellent when laser marking, and contrast between the background section and the laser-marking section becomes high, whereby clearer letters, figures, symbols or information can be obtained.

On the contrary, if the contained amount of the laser-light energy absorbing agent exceeds 1 part by mass, transparency of the transparent laser-marking sheet deteriorates. Further, when it is irradiated with laser-light energy, the amount of energy absorbed becomes too much, and so the resin will be degraded. As a result, sufficient contrast cannot be obtained. Additionally, if the contained amount of the laser-light energy absorbing agent exceeds 1 part by mass, abnormal heat generation may occur. If abnormal heat generation occurs, resin making up the sheet will be decomposed and foaming will be generated, thus failing to perform desired laser marking. On the contrary, if the contained amount of the laser-light energy absorbing agent is less than 0.0005 parts by mass, sufficient contrast between the background section and the laser-marking section cannot be obtained.

The laser-light energy absorbing agent as stated above is not limited especially as long as it absorbs laser-light energy and can change the irradiated section to have different hue, color and brightness than those of the background section. Specifically, they include at least one type selected from the group consisting of carbon black, titanium black, metal oxides, metal sulfides, metal nitrides, metal oxalates and metal carbonates. Preferable laser-light energy absorbing agent is at least one type selected from carbon black, titanium black, metal oxides, metal oxalates and metal carbonates. More preferable laser-light energy absorbing agent is at least one type or two types or more selected from carbon black, titanium black, and metal oxides.

Herein, carbon black, titanium black, metal oxides, metal sulfides, metal nitrides, metal oxalates and metal carbonates as the laser-light energy absorbing agent preferably have an average particle diameter less than 150 nm. More preferably the average particle diameter is less than 100 nm. Further, carbon black with an average particle diameter of 10 to 90 nm and a dibutylphthalate (DBT) oil absorption amount of 60 to 170 ml/100 gr or carbon black in combination with titanium black or a metal oxide with an average particle diameter less than 150 nm is used preferably. If the average particle diameter of the laser-light energy absorbing agent exceeds 150 nm, transparency of the transparent laser-marking sheet deteriorates unfavorably. Further serious unevenness may occur on the surface of the transparent laser-marking sheet unfavorably. If the average particle diameter of carbon black is less than 10 nm, laser color saturation deteriorates, and handling is difficult because it is too fine unfavorably. If the DBT oil absorption amount is less than 60 ml/100 gr, dispersibility is poor, while if when it exceeds 170 ml/100 gr, it has a poor opacifying property unfavorably.

Examples of metal to form an oxide in metal oxide as the laser-light energy absorbing agent include zinc, magnesium, aluminum, iron, titanium, silicon, antimony, tin, lead, copper, manganese, cobalt, vanadium, bismuth, niobium, molybdenum, ruthenium, tungsten, palladium, silver and platinum. Further, examples of composite metal oxide include ITO, ATO and AZO.

Examples of the metal sulfide as the laser-light energy absorbing agent include zinc sulfide and cadmium sulfide. Examples of the metal nitride include titanium nitride. Examples of the metal oxalates include magnesium oxalate and copper oxalate. Examples of the metal carbonates include basic copper carbonate.

More preferably the addition amount (blend amount) of the laser-light energy absorbing agent is 0.0005 to 1 part by mass to 100 parts by mass of the transparent resin including polycarbonate resin as a main component in the case of carbon black. It is 0.0008 to 0.1 parts by mass the most preferably. When carbon black and at least one type selected from metal oxides, metal sulfides and metal nitrides with an average particle diameter less than 150 nm are used together, the blend amount of the mixture is 0.0005 to 1 part by mass. It is 0.0008 to 0.5 parts by mass the most preferably.

The reason why the addition amount of the laser-light energy absorbing agent is adjusted at a desired amount in this way is that the transparent laser-marking sheet is preferably transparent. That is, when the transparent laser-marking sheet is used as an electronic passport, a layer called overlay is formed on a white sheet (printing inlay sheet) subjected to printing (hereinafter printing on the white sheet, such as printing of letters and figures, is called a "printing section" as needed), or the transparent laser-marking sheet is stacked thereon. In this case, a part of the overlay not subjected to printing is irradiated with laser-light energy to produce black color for marking of letters, figures, symbols or information, whereby a design at the printing section is often combined with an anti-forgery effect by laser marking for use.

The use in such a combination can lead to clear letters, figures, symbols or information by the clarity at a printing section and black/white contrast at a laser-marking section because the base layer is white. In other words, deterioration in the transparency of the overlay layer that is to be stacked on the aforementioned printing inlay sheet causes unclarity of printed images, letters or the like and poor black/white contrast at the laser marking section, which poses a problem in actual use. Accordingly, carbon black with a smaller average particle diameter is preferably used, and when the mixture of carbon black and titanium black and at least one type selected from other metal oxides, metal sulfides, metal nitrides, metal oxalates, and metal carbonates is used as the laser-light energy absorbing agent as well, the average particle diameter of these metal oxides, metal sulfides, metal nitrides, metal oxalates and metal carbonates is at least less than 150 nm and preferably less than 100 nm.

### (Lubricant, antioxidant, anticolorant, UV absorbing agent and light stabilizer)

In the present embodiment, the base-material sheet making up a transparent laser-marking sheet preferably includes lubricant. When the transparent laser-marking sheet includes a multilayer sheet, skin layers thereof preferably include lubricant. The lubricant contained can prevent fusion bonding to a pressing plate during hot press for forming.

Examples of the lubricant include fatty acid ester lubricant, fatty acid amide lubricant, and fatty acid metal-salt lubricant, and at least one type of the lubricant selected from them is preferably added.

Examples of the fatty acid ester lubricant as stated above include butyl stearate, cetyl palmitate, monoglyceride stearate, diglyceride stearate, triglyceride stearate, esters of montan acid wax, wax esters, dicarboxylates, and complex esters. Examples of the fatty acid amide lubricant include stearic acid amide, and ethylenebisstearamide. Examples of the fatty acid metal salt lubricant include calcium stearate, magnesium stearate, zinc stearate, aluminum stearate, and barium stearate.

Further, in the present embodiment, when the base-material sheet of the transparent laser-marking sheet is configured as a single layer sheet, it preferably includes at least one type of antioxidant and anticolorant and at least one type of UV absorbing agent and light stabilizer as needed. When the base-material sheet of the transparent laser-marking sheet is configured as a multilayer sheet as well, at least one layer of skin layers and a core layer thereof preferably includes at least one type of antioxidant and anticolorant and at least one type of UV absorbing agent and light stabilizer as needed. The addition (blending) of at least one type of antioxidant and anticolorant effectively prevents deterioration in physical property due to decrease in molecular weight during forming process or effectively stabilizes the hue. Examples of the at least one of antioxidant and anticolorant include phenol antioxidant and phosphite ester anticolorant. The addition (blending) of at least one type of UV absorbing agent and light stabilizer effectively suppresses a lightfastness property from deteriorating during the storage of the transparent laser-marking sheet and in the actual usage of an electronic passport or a plastic card as a final product. Examples of such UV absorbing agent include benzotriazole UV absorbing agent, hydroxyphenyltriazine UV absorbing agent and cyclic imino ester UV absorbing agent.

Examples of the antioxidant include phenol antioxidant and amine antioxidant.

Examples of the phenol antioxidant include α-tocopherol, butylhydroxytoluene, sinapyl alcohol, vitamin E, n-octadecyl-3-(3,5-di-t-butyl-4-hydroxyphenol) propionate, 3-5-di-t-butyl-4-hydroxytoluene, pentaerythrityl-tetrakis[3-(3,5-di-t-butyl-4-hydroxyphenyl) propyonate], triethyleneglycol-bis[3-(3-t-butyl-5-methyl-4-hydroxyphenyl)propionate], 1,6-hexanediol-bis[3-(3,5-di-t-butyl-4-hydroxyphenyl) propionate], 2-t-butyl-6-(3'-t-butyl-5'-methyl-2'-hydroxybenzil)-4-methylphenylacrylate, 2,6,-di-t-butyl-4-(N,N-dimethylaminomethyl)phenol, 3-5-di-t-butyl-4-hydroxybenzylphosphonate diethyl ester, 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis(4-methyl-6-cyclohexylphenol), 2,2'-dimethylene-bis(6-a-methyl-benzyl-p-cresol), 2,2'-ethylidene-bis(4,6-di-t-butylphenol), 2,2'-butylidene-bis(4-methyl-6-t-butylphenol), 4,4'-butylidenebis(3-methyl-6-t-butylphenol), triethylene glycol-N-bis-3-(3-t-butyl-4-hydroxy-5-methylphenyl) propionate, 1,6-hexanediolbis[3-(3,5-di-t-butyl-4-hydroxyphenyl)propionate], bis[2-t-butyl-4-methyl-6-(3-t-butyl-5-methyl-2-hydroxybenzyl)phenyl]telephthalate, 3,9-bis{2-[3-(3-t-butyl-4-hydroxy-5-methylphenyl)propionyloxy]-1,1,-dimethylethyl}-2,4,8,10-tetraoxaspiro[5,5]undecane, 4,4'-thiobis(6-t-butyl-m-cresol),4,4'-thiobis(3-methyl-6-t-butylphenol), 2,2'-thiobis(4-methyl-6-t-butylphenol), bis(3,5-di-t-butyl-4-hydroxybenzyl)sulfide, 4,4'-di-thiobis(2,6-di-t-butylphenol), 4,4'-tri-thiobis(2,6-di-t-butylphenol), 2,2-tiodiethylenebis-[3-(3,5-di-t-butyl-4-hydroxyphenyl)propionate], 2,4-bis(n-octylthio)-6-(4-hydroxy-3',5'-di-t-butylanilino)-1,3,5-triazine, N,N'-hexamethylenebis-(3,5-di-t-butyl-4-hydroxyhydrocinnamide), N,N'-bis[3-(3,5-di-t-butyl-4-hydroxyphenyl)propyonyl]hydrazine, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tris(3,5-di-t-butyl-4-hydroxyphenyl)isocyanurate, tris(3,5-di-t-butyl-4-hydroxyphenyl)isocyanurate, 1,3,5-tris(3,5-di-t-butyl-4-hydroxybenzyl)isocyanurate, 1,3,5-tris(4-t-butyl-3-hydroxy-2,6-dimethylbenzyl)isocyanurate, 1-3-5-tris2[3(3,5-di-t-butyl-4-hydroxyphenyl)propyonyloxy]ethylisocyanurate, and tetrakis[3-(3,5-di-t-butyl-4-hydroxyphenyl)propyonyloxymethyl]methane.

Above all of these examples, n-octadecyl-3-(3,5-di-t-buryl-4-hydroxyphenyl)propyonate, 1,3,5-trimethyl-2,4,6-tris(3,5-di-t-butyl-4-hydroxybenzyl)benzene, 1,3,5-tris(3,5-di-t-butyl-4-hydroxybenzyl)isocyanurate, and tetrakis[3-(3,5-di-t-butyl-4-hydroxyphenyl)propyonyloxymethyl]methane are preferable, and n-octadecyl-3-(3,5-di-t-butyl-4-hydroxyphenyl)propionate is particularly preferable. The aforementioned hindered phenol antioxidants may be used alone or in combination of two or more types.

The anticolarant may be phosphite ester anticolorant. Examples thereof include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phospite, monodecyldiphenyl phosphite, monooctyldiphenyl phosphite, 2,2-methylenebis(4,6-di-t-butylphenyl)octyl phosphite, tris(diethylphenyl) phosphite, tris(di-iso-propylphenyl) phosphite, tris(di-n-butylphenyl) phosphite, tris (2,4,-di-t-butylphenyl) phosphite, tris(2,6-di-t-butylphenyl) phosphite, distearylpentaerythritol diphosphite, bis(2,4-di-t-butylphenyl)pentaerithritol diphosphite, bis(2,6-di-t-butyl-4-methylphenyl)pentaerithritol diphosphite, bis(2,6-di-t-butyl-4-ethylphenyl)pentaerithritol diphosphite, phenylbisphenol A pentaerithritol diphosphite, bis(nonylphenyl)pentaerithritol diphosphite, and dicyclohexylpentaerithritol diphosphite.

Other phosphite compounds in the anticolorant can be used, which react with divalent phenols and which has a cyclic structure. Examples thereof include 2,2'-methylenebis(4,6-di-t-butylphenyl)(2,4-di-t-butylphenyl) phosphite, 2,2'-methylenebis(4,6-di-t-butylphenyl)(2-t-butyl-4-methylphenyl)phosphite, 2,2'-methylenebis(4-methyl-6-t-butylphenyl)(2-t-butyl-4-metylphenyl)phosphite, and 2,2'-ethylidenebis(4-methyl-6-t-butylphenyl)(2-t-butyl-4-methylphenyl)phosphite.

Among the anticolorant as stated above, tris(2,4-di-t-butylphenyl)phosphite is particularly preferable because it has very high purity and is excellent in hydrolysis resistance and resistance to volatilization. The phosphite ester based anticolorant may be used alone or in combination of two or more kinds. Alternatively, it may be used together with phenol antioxidant.

Specific examples of the aforementioned benzotriazole UV absorbing agent, hydroxyphenyltriazine UV absorbing agent and cyclic imino ester UV absorbing agent as the UV absorbing agent include the following.

Examples of the benzotriazole UV absorbing agent include 2-(2'-hydroxy-5'-methylphenyl)benzotriazole, 2-(2'-hydroxy-3',5'-di-t-amylphenyl)benzotriazole, 2-(2'-hydroxy-3',5'-bis(α,α'-dimethylbenzyl)phenylbenzotriazole, 2-(2'-hydroxy-3',5'-di-t-butylphenyl)-5-chlorobenzotriazole, 2,2' methylenebis[4-(1,1,3,3-tetramethylbutyl)-6-(2H-benzotriazole-2-yl)phenol], and a compound represented by a condensate with methyl-3-[3-t-butyl-5-(2H-benzotriazole-2-yl)-4-hydroxyphenylpropionate-polyethylene glycol.

Examples of the hydroxyphenyltriazine UV absorbing agent include 2-(4,6-diphenyl-1,3,5-triazine-2-yl)-5-hexyloxyphenol, and 2-(4,6-bis(2,4-dimethylphenyl)-1,3,5-triazine-2-yl)-5-hexyloxyphenol.

Examples of the cyclic imino ester UV absorbing agent include 2,2'-p-phenylenebis(3,1-benzoxazine-4-one), 2-2'-m(2)-phenylenebis(3,1-benzoxazine-4-one), and 2,2'-4,4'-diphenylenebis(3,1-benzoxazine-4-one).

Examples of the light stabilizer include bis(2,2,6,6-tetramethyl-4-piperidyl)sebacate, bis(1,2,2,6,6-pentamethyl-4-piperidyl)sebacate, tetrakis (2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, poly{[6-(1,1,3,3-tetramethylbutyl)amino-1,3,5-triazine-2,4-diyl][(2,2,6,6-tetramethylpiperidyl)imino]hexamethylene[(2,2,6,6-tetramethylpiperidyl)imino]}, and a hyndered amine compound represented by polymethylpropyl-3-oxy-[4-(2,2,6,6-tetramethyl)piperidinyl]siloxane or the like. Such light stabilizer exhibits better performance in weather resistance in the use in combination with the aforementioned UV absorbing agent or, in some cases, with various antioxidants.

More preferably when the base-material sheet making up the transparent laser-marking sheet is configured as a single-layer sheet, the base-material sheet is made of a transparent polycarbonate resin composition including 0.01 to 3 parts by mass of lubricant to 100 parts by mass of transparent polycarbonate resin containing polycarbonate resin as main component. Further, the base-material sheet making up the transparent laser-marking sheet includes 0.1 to 5 parts by mass of at least one type of antioxidant and anticolorant and 0.1 to 5 parts by mass of at least one type of UV absorbing agent and light stabilizer to 100 parts by mass of the transparent polycarbonate resin containing polycarbonate resin as main component.

When the base-material sheet making up the transparent laser-marking sheet is configured as a multilayer sheet (so-called three-layered sheet), a skin layer of the multilayer sheet in the base-material sheet making up the transparent laser-marking sheet is made of a transparent polycarbonate resin composition including 0.01 to 3 parts by mass of lubricant to 100 parts by mass of transparent resin including noncrystalline polyester resin as a main component. Further, at least one layer of the skin layers and the core layer of the multilayer sheet includes 0.1 to 5 parts by mass of at least one type of antioxidant and anticolorant and 0.1 to 5 parts by mass of at least one type of UV absorbing agent and light stabilizer to 100 parts by mass of the transparent polycarbonate resin containing polycarbonate resin as main component.

Herein, the addition amount of the lubricant is 0.01 to 3 parts by mass, more preferably 0.05 to 1.5 parts by mass. The addition amount of lubricant less than 0.01 parts by mass causes a problem of fusion bonding to a pressing plate during hot press, and the addition amount of lubricant exceeding 3 parts by mass causes a problem in interlayer fusion bonding during hot press of a multilayered lamination for an electronic passport or a plastic card. Less than 0.1 parts by mass of at least one type of antioxidant and anticolorant causes a tendency of a trouble of thermal oxidation of the polycarbonate resin at a melt extrusion process and thermal discoloration due to the thermal oxidation. More than 5 parts by mass tends to cause a problem of bleeding of these additives, for example, unfavorably. Less than 0.1 parts by mass of at least one type of UV absorbing agent and light stabilizer has a poor effect thereof, and tends to cause a problem of deterioration in a lightfastness property and accordingly discoloration. More than 5 parts by mass tends to cause a problem of bleeding of these additives, for example, unfavorably.

Herein, the fusion bonding effect and the opacifying property of the multilayer sheet, such as an electronic passport or a plastic card and the contrast with a laser marking section become extremely important elements concerning the feasibility of the multilayer sheet, the productivity, the ability of responding to market needs and the like.

### (Forming method of base-material sheet)

In the present invention, when the base-material sheet making up the transparent laser-marking sheet is to be obtained, a method of melt extruding a transparent polycarbonate resin composition may be used for a single sheet, for example. When a multilayer sheet is to be formed, a method of melt extruding a resin composition making up each layer, a method of forming a material making up each layer in a film shape and laminating the same, or a method of melt extruding two layers and laminating a film separately formed on these layers is available. From the viewpoints of productivity and costs, stacking for integration by melt extrusion is preferable.

Specifically, in the case of a multilayer sheet, the resin composition making up each layer is prepared or is formed into a pellet shape as necessary to be put in each hopper of a three-layer T die extruder where T dies are subjected to shared connection. Then, they are melted at a temperature ranging from 200 to 300°C for three-layered T-die melt extrusion. After the forming, the resultant is cooled for solidification with a cooling roll or the like to form a three-layered sheet. The sheet can be formed by a known method without being limited to the aforementioned method. For example, it can be obtained in accordance with the description on Pages 6 and 7 of JP-A-10-71763.

### (Whole beam transmittance)

The whole beam transmittance of the base-material sheet is preferably 70% or greater and more preferably 85% or greater. For instance, when the transparent laser-marking sheet of the present invention is used for an electronic passport, printing is typically performed for this purpose. To this end, below the transparent laser-marking sheet of the present embodiment, a printing inlay sheet is stacked, for example, and then laser-light energy is applied at a non-printing section other than the printing section of the printing inlay sheet in the transparent laser-marking sheet as an outermost layer so as to turn the section in black, i.e., marking letters, figures, symbols or information, whereby a design at the printing section is often combined with anti-forgery by laser marking for use. Such a combination can lead to clear letters, figures, symbols or information due to the clarity at the printing section and black/background color contrast at the laser marking section because the base layer is white. That is, in the case of lamination of a white sheet, for example, the transparency of the outermost layer in the aforementioned desired range of whole beam transmittance can maximize this effect, that is, can emphasize the clarity of black/white contrast. In other words, such transparency of the outermost layer is important to secure the clarity of the printing section and the clarity of black/white contrast at the laser marking section, and if the whole beam transmittance is less than 70%, black/white contrast is insufficient, and so a problem of a failure in securing sufficient markability occurs, and since printing is performed on the white sheet as the original surface, a problem arises in visibility of this printing unfavorably.

Note here that the "whole beam transmittance" is an index indicating the ratio of light passing through a sheet, a film, a membrane or the like with respect to light incident there. When incident light entirely passes, the whole beam transmittance will be 100%. The "whole beam transmittance" in the present specification shows a value by the measurement in keeping with JIS-K7105 (test method for optical characteristics of plastics), and the whole beam transmittance may be measured using a haze meter produced by Nippon Denshoku Industries Co., Ltd. (trade name: "NDH 2000") or a spectrophotometer (trade name "EYE7000" produced by GretagMacbeth GmbH), for example.

For instance, as shown in Fig. 1, a transparent laser-marking sheet 1 (1A) including a base-material sheet 2 as a single-layer sheet, and an adhesive layer 3 on one face of the base-material sheet 2, which is described in the above, can be shown as one example.

As another example, as shown in Fig. 2, a transparent laser-marking sheet 1 (1B) including a base-material sheet 20 as a multilayer sheet having skin layers 4 and a core layer 5, and an adhesive layer 3 on the base-material sheet 20, which are described in the above, can be shown.

### [II] Laser-marking sheet for electronic passport

Next, the following describes a laser-marking sheet for electronic passport, including the transparent laser-marking sheet described in the above. This is one example, and is not a limiting one.

Firstly a laser-marking sheet for electronic passport 100 (100A) can be shown in Fig. 3 as a first mode of the laser-marking sheet for electronic passport. That is, the laser-marking sheet for electronic passport 100 (100A) is a laser-marking sheet for electronic passport having the structure of five layers stacked, including a transparent laser-marking sheet 1 (1A) including a base-material sheet configured as a single-layer sheet/multilayer sheet for core 6/binding sheet 10/multilayer sheet for core 6/a transparent laser-marking sheet 1 (1A) including a base-material sheet configured as a single-layer sheet base-material sheet. The transparent laser-marking sheet 1 (1A) is a transparent laser-marking sheet as stated above, including an adhesive layer 3 on at least one of the faces of the base-material sheet 2. That is, the base-material sheet 2 is configured as a single-layer sheet made of a transparent polycarbonate resin composition containing polycarbonate resin and laser-light energy absorbing agent. Then the adhesive layer 3 of the transparent laser-marking sheet is made of a transparent thermal activation adhesive including polyester resin, and is configured as a layer of 1 to 20 µm in thickness. The binding sheet 10 is described later.

The multilayer sheet for core 6 includes skin layers 7 and a core layer 8, and is a sheet that is formed by stacking at least three layers by melt extrusion. The skin layers 7 as both of the outermost layers of this multilayer sheet for core 6 are made of copolymer polyester resin, which is polyester composed of a dicarboxylic acid unit having mainly a telephthalate unit, an ethylene glycol unit (I) and a glycol unit having mainly 1,4-cyclohexane dimethanol unit (II), where (I)/(II) is 90 to 30/10 to 70 mol%. The core layer 8 of the multilayer sheet for core 6 is made of transparent resin including polycarbonate resin as a main component. At least one layer of these skin layers 7 and core layer 8 includes 1 part by mass or more of at least one type of more of dyes or pigments to 100 parts by mass of the copolymer polyester resin and/or 100 parts by mass of the polycarbonate resin. Further the total thickness of the multilayer sheet for core 6 is from 50 to 200 µm, and the thickness ratio of the core layer 8 to the total thickness of the multilayer sheet for core 6 is 20% or more and less than 80%. The thus configured laser-marking sheet for electronic passport can be shown as one example.

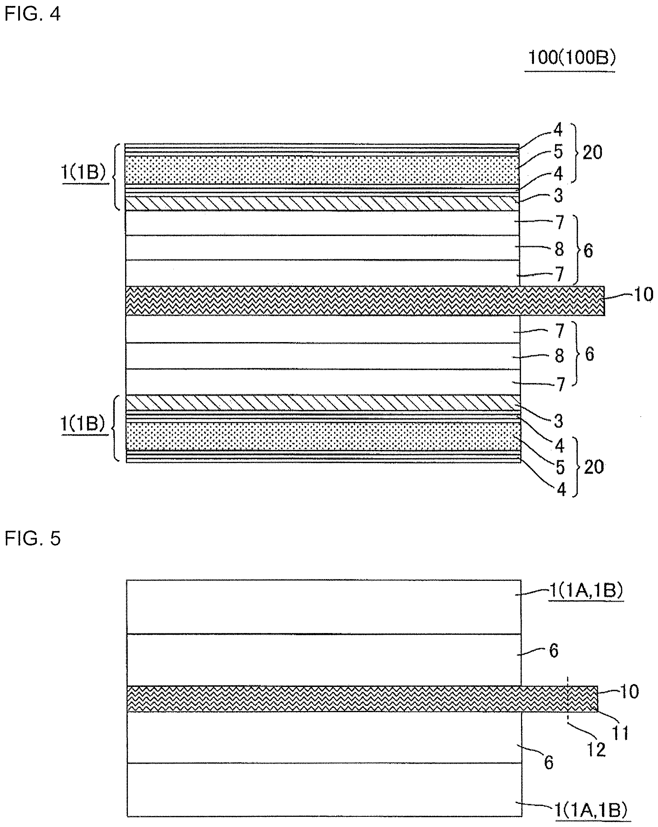

As an application example of the laser-marking sheet for electronic passport, a laser-marking sheet for electronic passport 100 (100B) can be shown in Fig. 4. That is, the laser-marking sheet for electronic passport 100 (100B) is a laser-marking sheet for electronic passport having the structure of five layers stacked, including a transparent laser-marking sheet 1 (1B)/multilayer sheet for core 6/binding sheet 10/multilayer sheet for core 6/transparent laser-marking sheet 1 (1B). The transparent laser-marking sheet 1 (1B) is a transparent laser-marking sheet as stated above, including an adhesive layer 3 on at least one of the base-material sheet 20 including skin layers 4 and a core layer 5. The base-material sheet 20 includes the skin layers 4 and the core layer 5, the skin layers 4 as both of the outermost layers are made of a thermoplastic resin composition containing noncrystalline polyester resin, and the core layer 5 is configured as a multilayer sheet made of a transparent polycarbonate resin composition including polycarbonate resin and laser-light energy absorbing agent. Then, the adhesive layer 3 of the transparent laser-marking sheet is configured as a layer made of transparent thermal activation adhesive including polyester resin and having a thickness of 1 to 20 µm.

Similarly to the above, the multilayer sheet for core 6 includes skin layers 7 and a core layer 8, and is a sheet that is formed by stacking at least three layers by melt extrusion. The skin layers 7 as both of the outermost layers of this multilayer sheet for core 6 are made of copolymer polyester resin, which is polyester composed of a dicarboxylic acid unit having mainly a telephthalate unit, an ethylene glycol unit (I) and a glycol unit having mainly 1,4-cyclohexane dimethanol unit (II), where the ethylene glycol unit (I) and the 1,4-cyclohexane dimethanol unit (II) have a relationship such that (I)/(II) is 90 to 30/10 to 70 mol%. Then the core layer 8 of the multilayer sheet for core 6 is made of transparent resin including polycarbonate resin as a main component, and at least one layer of these skin layers and core layer includes 1 part by mass or more of at least one type of more of dyes or pigments to 100 parts by mass of the copolymer polyester resin and/or 100 parts by mass of the polycarbonate resin. Further the total thickness of the multilayer sheet for core 6 is from 50 to 200 µm, and the thickness ratio of the core layer 8 to the total thickness of the multilayer sheet for core 6 is 20% or more and less than 80%. The thus configured laser-marking sheet for electronic passport can be shown as an example. The multilayer sheet for core 6 and the binding sheet 10 shown in Fig. 4 are sheets similar to those in Fig. 3.

### (Multilayer sheet for core)

Herein, the multilayer sheet for core 6 is configured as at least three-layer structured sheet (three-layered sheet) including skin layers 7 and a core layer 8, and is formed by stacking by melt extrusion. That is, similarly to the base-material sheet 20 making up the transparent laser-marking sheet 1 (1B), this multilayer sheet for core 6 also may be made up of five layers, seven layers and any layers of odd numbers more than those as long as it is made of three layers or more and the core layer 8 may be sandwiched between the skin layers 7.

If the multilayer sheet for core 6 has a too many multilayered structure, then the thickness of one layer of the skin layers 7 and the core layers 8 disposed is too small. In this case, thermal adhesiveness with the transparent laser-marking sheet according to the present invention will deteriorate unfavorably. Therefore, the multilayer sheet for core is made up of five layers, more preferably three layers.

For instance, in the case of a multilayer sheet for core made up of three layers as one example, two skin layers are disposed on both of the outermost sides (one side and the other side) so that they are arranged as in a skin layer/a core layer/a skin layer. Then, the one core layer is disposed so as to be sandwiched between the two skin layers, thus forming the multilayer sheet for core. In the case of a multilayer sheet for core made up of five layers as another example, two skin layers are disposed on both of the outermost sides (one side and the other side) so that they are arranged as in a skin layer/a core layer/a skin layer/a core layer/a skin layer. The multilayer sheet for core may be formed by arranging skin layers and core layers alternately. In this way, the multilayer sheet for core having a multilayered structure is formed, whereby sufficient thermal adhesiveness can be secured.

### (Thickness of multilayer sheet for core)

Preferably, the total thickness (overall thickness) of the multilayer sheet for core 6 is from 50 to 200 µm, and the thickness ratio of the core layer 8 in the multilayer sheet for core 6 to the total thickness of the multilayer sheet for core 6 is 20% or more and less than 80%. If the total thickness of the multilayer sheet for core 6 is less than 50 µm, the skin layers 7 in the multilayer sheet for core 6 become inevitably thin. In this case, thermal adhesiveness between the transparent laser-marking sheet 1 (1A, 1B) that is stacked at the outermost layer during thermal fusion bonding in the multilayer-sheet stacking process and the multilayer sheet for core 6 cannot be secured. If the total thickness of the multilayer sheet for core 6 exceeds 200 µm, a laser-marking sheet for electronic passport including such a multilayer sheet for core 6 of 200 µm or more in thickness will have a too thick total thickness, and so the usability thereof will deteriorate.

If the skin layers 7 in the multilayer sheet for core 6 are too thin, then thermal adhesiveness between the transparent laser-marking sheet 1 (1A, 1B) that is stacked at the outermost layer and the multilayer sheet for core 6 cannot be secured during thermal fusion bonding in the multilayer sheet stacking process. On the contrary, if the skin layers 7 in the multilayer sheet for core 6 are too thick, then the core layer 8 in the multilayer sheet for core 6 described later will be thin inevitably. In this case, opacifying property cannot be secured when printing is performed on the multilayer sheet for core 6. Further, when no colorant is included in the skin layers 7 of the multilayer sheet for core 6, a problem will occur, that when black marking is performed to the transparent laser marking sheet 1 (1A, 1B) as the outermost layer by laser-light energy irradiation, contrast cannot be secured and visibility and clarity at a laser-marking section cannot be secured.

In this way, the thickness of the multilayer sheet for core 6 as a whole at the desired thickness can easily realize local properties such as properties of the multilayer sheet for core 6. Additionally, the properties of a laser-marking sheet for electronic passport including the transparent laser-marking sheet 1 (1A, 1B) and the multilayer sheet for core 6 can be realized easily. Moreover, not only the total thickness of the multilayer sheet for core 6 as a whole but also the thickness ratios of the skin layers 7 and the core layer 8 making up the multilayer sheet for core 6 to the multilayer sheet for core 6 are set at the desired ratios as stated above preferably, because the effects of improving contrast easily, for example, in association with the total thickness of the multilayer sheet for core 6 as a whole within the desired range, can be exerted more.

### (Skin layers in multilayer sheet for core)

The skin layers 7 in the multilayer sheet for core 6 preferably have the same thickness. The multilayer sheet for core 6 including skin layers having different thicknesses causes variations in thermal adhesiveness between the transparent laser-marking sheet 1 (1A, 1B) at the outermost layer and the multilayer sheet for core 6 during thermal fusion bonding in the multilayer sheet lamination procedure unfavorably. Further, the laminate after hot press may generate warpage unfavorably.

If the skin layers 7 in the multilayer sheet for core 6 are too thin, thermal adhesiveness will deteriorate. As stated above, if the skin layers 7 in the multilayer sheet for core 6 are too thick, then the core layer 8 in the multilayer sheet for core 6 will be thin inevitably. Herein, when colorant is mixed only in the core layer 8 of the multilayer sheet for core 6, resin containing the colorant may be put in only one extruder, and therefore labor for cleaning of the colorant during cleaning-up after the production of sheets can be reduced half that in the case of mixing colorant in the skin layers as well as the core layer in extreme cases. This, however, causes the lack of an opacifying property when partial printing or entire printing is performed on the multilayer sheet for core 6. When colorant is mixed in the skin layers 7 and the core layer 8 of the multilayer sheet for core 6, any problem concerning the opacifying property as stated above will not occur. However, when a three-layered sheet using two types of resins is formed by melt extrusion, two extruders are used, and so resin including colorant has to be put in these two extruders. In this case, after the production of sheets formed by two-types and three-layered melt extrusion, cleaning-up of the colorant requires a lot of labor and time, often causing problems of productivity and cost. Therefore, it is preferable that the total thickness (overall thickness) of the multilayer sheet for core 6 and the ratio of the thickness of the core layer 8 to the total thickness of the multilayer sheet for core 6 be formed within the desired ranges as stated above.

Materials for forming the skin layers 7 in the multilayer sheet for core 6 include a polyester resin composition as stated above. That is, the skin layers 7 are preferably formed as a layer made of a substantially noncrystalline aromatic polyester resin composition prepared from copolymer polyester resin. For instance, substantially noncrystalline aromatic polyester based resin ("PETG", trade name, produced by Eastman Chemical Company) may be used, which is commercially available, where about 30 mol% of ethylene glycol component in polyethylene telephthalate is substituted by 1, 4-cycrohexane dimethanol.

### (Core layer in multilayer sheet for core)

The core layer 8 in the multilayer sheet for core 6 is configured as a so-called nucleus layer disposed at the center of the three-layered sheet. That is, the core layer 8 is formed as the nucleus layer of the three-layered sheet in such a manner that it is sandwiched between two skin layers 7 disposed on the outermost sides. As the thickness of the core layer 8, the ratio of the thickness of the core layer to the thickness of the entire sheet is preferably 20% or greater and less than 80%. It is preferably 40% or greater and less than 75%. The ratio of the thickness of the core layer 8 of 80% or greater relatively makes the skin layers thinner because the total thickness of the multilayer sheet for core 6 is as thin as 50 to 200 µm, leading to a not-preferable factor of variations in thermal adhesiveness between the transparent laser-marking sheet 1 (1A, 1B) as the outermost layers and the multilayer sheet for core 6 during thermal fusion bonding in the multilayer sheet stacking procedure. The thickness ratio of the core layer 8 less than 20% causes a problem of failing to secure an opacifying property when printing is performed over the multilayer sheet for core 6. Further this causes a problem of failing to secure contrast when black marking is performed to the transparent laser-marking sheet 1 (1A, 1B) as the outermost layer by laser-light energy irradiation, and to secure visibility and clarity at a laser-marking section.

The core layer 8 in the multilayer sheet for core 6 may be made of a material that is polycarbonate resin similarly to the above, particularly transparent polycarbonate resin. The polycarbonate resin used, but not limited, preferably has a melt volume rate of 4 to 20 cm³/10min. Resin with a melt volume rate less than 4 cm³/10min. is useful for the improvement of toughness of the sheet, but has poor forming workability and so has difficulty in the practical use unfavorably. Resin with a melt volume rate exceeding 20 cm³/10min. causes poor toughness of the sheet unfavorably.

### (Colorant in multilayer sheet for core)

At least one of the skin layers 7 and the core layer 8 in the multilayer sheet for core 6 preferably includes 1 part by mass or greater of at least one type of a colorant for resin such as dyes and pigments to 100 parts by mass of the above-stated copolymer polyester resin and/or to 100 parts by mass of the above-stated polycarbonate resin. The sheet is different in this point from the base-material sheet 20 making up the transparent laser-marking sheet 1 (1B) including an adhesive layer. Blending of 1 part by mass or more of colorant for resin such as colorant dyes and pigments is for better contrast during marking by irradiation with laser-light energy after the stacking of the transparent laser-marking sheet 1 (1A, 1B) and the multilayer sheet for core 6 serving as a coloring multilayer sheet as described later. This is for securing of an opacifying property when printing is performed over the multilayer sheet for core 6 as well.

Examples of the colorant of resin such as colorant dyes and pigments include titanium oxide, barium oxide and zinc oxide as a white pigment, iron oxide and titanium yellow as a yellow pigment, iron oxide as a red pigment, and cobalt blue ultramarine as a blue pigment. Herein colorant for light coloring or tint colors is preferable for better contrast.

Among these colorants, colorant of resin, such as a white-colored dye or pigment for emphasizing contrast is added more preferably.

In one of preferable embodiments, at least one layer of the core layer 8 and the skin layers 7 in the multilayer sheet for core 6 includes 0.1 to 5 parts by mass of at least one type of antioxidant and anticolorant and 0.1 to 5 parts by mass of at least one type of UV absorbing agent and light stabilizer to 100 parts by mass of the copolymer polyester resin or the polycarbonate resin. The addition (blending) of at least one type of antioxidant and anticolorant effectively influences on the property deterioration due to decrease in the molecular weight and the hue stabilization during forming process. The addition (blending) of at least one type of UV absorbing agent and light stabilizer is preferable because it effectively suppresses a lightfastness property from deteriorating during the storage of a laser-marking sheet for electronic passport and in the actual usage of an electronic passport as a final product. That is, this configuration allows a desired amount of the at least one type of antioxidant and anticolorant and the at least one type of UV absorbing agent and light stabilizer to be included selectively as needed. In addition, a region for inclusion may be selected as needed, and therefore, the effects of the present invention can be exerted more as the whole sheet synergistically.

Note here that the lubricant, the antioxidant and the anticolorant in the multilayer sheet for core 6 are the same as the lubricant, the antioxidant and the anticolorant included in the transparent laser-marking sheet as described above. Therefore refer to the descriptions for those about the transparent laser-marking sheet.

### (Binding sheet)

The binding sheet 10 in the laser-marking sheet for electronic passport is a sheet having a very important role to bind (1) letters, figures, symbols or information written on a transparent laser-marking sheet by laser marking, (2) information such as images and letters printed on the multilayer sheet for core 6 as stated above by printing, and (3) various types of information that is stored in a storage medium such as an IC chip to be disposed on a sheet, i.e., a so-called inlet sheet including various types of information stored in a storage medium such as an IC chip disposed thereon, with a cover of a passport and other visa sheets integrally and firmly. To this end, the binding sheet has to have rigid thermal adhesiveness, appropriate flexibility and thermal resistance during thermal fusion bonding. For instance, this binding sheet 10 is bound by a sewing machine with a cover or the like of (a passport), the sheet has to have excellent tear strength and tensile strength at the machine-sewn portion, and light stability and thermal resistance at this machine-sewn portion. Further it has to have resistance to repeated folding i.e., have an excellent hinge property. Therefore, the following materials are preferably used for the binding sheet 10 to meet these demands.

The binding sheet 10 playing such a role preferably is configured as a sheet made of at least one type selected from thermoplastic polyester resin, thermoplastic polyester elastomer, thermoplastic polyamide resin, thermoplastic polyamide elastomer, thermoplastic polyurethane resin, and thermoplastic polyurethane elastomer. Alternatively, the binding sheet 10 preferably is configured as a laminate sheet including a woven fabric of polyester resin and/or polyamide resin, and a sheet made of the woven fabric and at least one type selected from thermoplastic polyester resin, thermoplastic polyester elastomer, thermoplastic polyamide resin, thermoplastic polyamide elastomer, thermoplastic polyurethane resin and thermoplastic polyurethane elastomer.

### (Size of binding sheet)

The binding sheet 10 is used for easy binding to be an electronic passport as described above. Therefore there is no particular limitation on the shape, the length, the size and the like as long as it has a shape, a size and the like making it easy to bind, and they can be suitably selected as needed.

Preferably the binding sheet 10 has a thickness of 50 to 500 µm, preferably 50 to 250 µm. The thickness of the binding sheet 10 less than 50 µm means insufficient strength at the machine-sewn section, which leads to a concern that a multilayer sheet with laser-marked personal information such as letters, figures, symbols or information on individuals is peeled off from the electronic passport. The thickness exceeding 500 µm makes the stiffness of the sheet too large, and so the electronic passport opens spontaneously even in non-use unfavorably.

### (Protruding portion of binding sheet)

As shown in Fig. 5, an end of the binding sheet 10 has a protruding portion 11 protruding from the transparent laser-marking sheet 1 (1A, 1B) and the multilayer sheet for core 6 sheet. This configuration can facilitate incorporation with an electronic passport by machine sewing or bonding or by machine sewing and bonding using this protruding portion.

The length of the protruding portion is preferably determined according to machine-sewing or bonding workability or machine-sewing and bonding workability and the strength at the machine-sewn section and the bonding strength. Specifically, the protruding portion preferably has a length of 5 to 100 mm, more preferably 5 to 50 mm and further preferably 5 to 20 mm.

Such a protruding portion formed at the binding sheet 10 can facilitate the incorporation with an electronic passport. This protruding portion is to allow for incorporation of one end of the binding sheet 10 in the longitudinal direction with an electronic passport using the protruding portion that is longer than the transparent laser-marking sheet 1 (1A, 1B) and the multilayer sheet for core 6 by machine-sewing or bonding, or machine-sewing and bonding. In the drawing, reference numeral 12 denotes a machine-sewn section.

When the binding sheet 10 is made of thermoplastic polyester resin, thermoplastic polyamide resin or thermoplastic polyurethane resin, thermoplastic adhesive or a thermosetting adhesive may be applied on one face or both faces of a part other than the protruding portion as needed. When the thermoplastic adhesive or the thermosetting adhesive is applied, the thickness of these thermoplastic adhesive and thermosetting adhesive applied preferably is from 0.1 to 20 µm. This enables bonding strength, and so can suppress a problem during forming. On the contrary, the thickness of the adhesive applied less than 0.1 µm cannot realize sufficient bonding strength. The thickness of adhesive applied exceeding 20 µm makes the total thickness too large, or causes sticking-out of the adhesive during hot press unfavorably.

Further when the binding sheet 10 is woven fabric, fibers making up the woven fabric preferably have a fiber diameter of 40 to 250 µm. When there are mesh openings, the fiber diameter is 60 to 300 µm preferably. Forming to have a desired dimension as stated above can facilitate not only the forming of a laser-marking sheet for electronic passport, but also the production thereof. The woven fabric may have fine texture or have openings (mesh openings) therein.

For the binding sheet 10, a composite hinge sheet including a woven-fabric like sheet (mesh cloth, or a non-woven fabric) made of flat yarns and having openings, the openings of which are blocked with thermoplastic elastomer or the mixture of thermoplastic elastomer, can be used preferably. Herein, the woven-fabric like sheet preferably is a two-axis structure made up of a plurality of yarns including warps and woofs, or a three-axis structure made up of a plurality of yarns including warps, woofs and oblique yarns, where at least one type of the warps, the woofs, or the oblique yarns are flat yarns having a flat cross section. The thus configured binding sheet is excellent in tearing and tensile strength at a binding portion. Especially this can avoid and prevent reliably tearing-off of the composite hinge sheet from the passport body. Additionally, it does not lose flexibility, has sufficient strength against repeated folding, and is excellent in time-related stability for lightfastness during actual use.

Further, for the binding sheet 10, a combination sheet can be used, which is configured by jointing a sheet made of thermoplastic resin and a hinge sheet by bonding through point bonding or line bonding. Examples of the thermoplastic resin making up the sheet include polycarbonate resin, amorphous polyester resin, polymer alloy of polycarbonate resin and amorphous polyester resin, thermoplastic polyurethane elastomer, thermoplastic polyamide elastomer, thermoplastic polyester elastomer, thermoplastic olefin elastomer, thermoplastic styrene elastomer, thermoplastic acrylic elastomer, and thermoplastic ethylene-vinyl acetate copolymer elastomer. An example of the hinge sheet includes a composite hinge sheet made up of woven fabric, knitted fabric or non-woven fabric made of at least one type selected from polyester resin, polyamide resin, polypropylene resin, and polyethylene naphthalate resin, and the thermoplastic elastomer as stated above or the mixture including the thermoplastic elastomer. The woven fabric, the knitted fabric or the non-woven fabric may be a two-axis structure made up of a plurality of yarns including warps and woofs, where the yarns have a circular, elliptical or rectangle cross section, or a three-axis structure made up of a plurality of yarns including warps, woofs and oblique yarns. Such a combination sheet has formability, workability and versatility, and has both of the properties that a sheet made of thermoplastic resin has, such as thermal adhesiveness, flexibility, toughness, heat resistance, formability and workability and the properties that a hinge sheet has, such as resistance to tearing, resistance to fracture, flexibility, resistance to bending, durability, thermal adhesiveness, workability and dimension accuracy.

Fig. 5 schematically shows one embodiment of an application example of a transparent laser-marking sheet of the present invention to an electronic passport. Specifically, this drawing schematically shows a cross section of a laser-marking sheet for electronic passport, in which a multilayer sheet for core and a transparent laser-marking sheet are stacked for integration on both faces of a binding sheet to be bound to a surface or a rear face of an electronic passport.

### (Method for manufacturing multilayer sheet for core and laser-marking sheet for electronic passport)

In the present invention, a method for obtaining the multilayer sheet for core 6 includes a method of melt extruding a resin composition making up each layer, followed by stacking, a method of forming a material making up a resin composition making up each layer in a film shape and laminating the same, or a method of melt extruding two layers for forming and laminating a film separately formed on the these layers, similarly to the base-material sheet 20 making up the transparent laser-marking sheet. From the viewpoints of productivity and costs, lamination for integration by melt extrusion is preferable.

Specifically, the resin composition making up each layer is prepared or is formed into a pellet shape as necessary to be put in each hopper of a three-layer T die extruder where T dies are subjected to shared connection. Then, they are melted at a temperature ranging from 200 to 300°C for three-layered T-die melt extrusion, and are cooled for solidification with a cooling roll or the like to form a three-layered laminate.

The thus obtained transparent laser-marking sheet 1 (1A, 1B) and the multilayer sheet for core 6 are cut into predetermined dimensions, and then are stacked. During the stacking, they are disposed so that the adhesive layer 3 disposed at the transparent laser-marking sheet 1 (1A, 1B) is brought into contact with the multilayer sheet for core 6. Such a disposition allows the transparent laser-marking sheet 1 (1A, 1B) and the multilayer sheet for core 6 to be integrated firmly. Herein, they are bonded by thermal fusion in a desired time, at a desired pressure and a desired temperature, whereby an integrated sheet as shown in Figs. 3 to 5 can be obtained.

Alternatively, a two-type and three-layered sheet is extruded by melt co-extrusion for each of the transparent laser-marking sheet 1 (1A, 1B) and the multilayer sheet for core 6. After the extrusion, roll-shaped sheets wound around in a roll shape are made to pass between heating rollers heated at a predetermined temperature. For instance, the transparent laser-marking sheet 1 (1A, 1B)/multilayer sheet for core 6/transparent laser-marking sheet 1 (1A, 1B), the multilayer sheet for core 6/a sheet made of polyester elastomer, polyester mesh cloth/multilayer sheet for core 6 is made to pass therethrough to produce a long-length lamination sheet by heating and pressing through heating and pressing rollers, which is then cut into predetermined dimensions. Herein the adhesive layer 3 of the transparent laser-marking sheet 1 (1A, 1B) is formed by, after melt extrusion of the base-material sheet 2, 20 in the transparent laser-marking sheet 1 (1A, 1B), coating (applying) transparent thermal activation adhesive made of polyester resin on at least one of the faces of the sheet. The multilayer sheet for core 6 may be brought into contact with the face of the sheet where the adhesive layer 3 is formed, followed by heating and pressing for forming.

Still alternatively, the transparent laser-marking sheet 1 (1A, 1B) and the multilayer sheet for core 6 are cut into predetermined dimensions, followed by preparation of a cut-sheet lamination sheet by a hot pressing machine similarly to the above, for example, to be the transparent laser-marking sheet 1 (1A, 1B)/multilayer sheet for core 6/transparent laser-marking sheet 1 (1A, 1B), the transparent laser-marking sheet 1 (1A, 1B)/multilayer sheet for core 6/a sheet made of polyester elastomer, polyester mesh cloth/multilayer sheet for core 6/transparent laser-marking sheet 1 (1A, 1B) or the multilayer sheet for core 6/another sheet/multilayer sheet for core 6. In this manufacturing of the laminate as well, the cut-sheet lamination sheet is preferably manufactured by bringing the adhesive layer 3 disposed at the transparent laser-marking sheet 1 (1A, 1B) into contact with the multilayer sheet for core 6.

Herein, the desired time, the desired pressure and the desired temperature are not limited especially, and they are preferably selected appropriately as needed while considering the compositions, the types and the like of the transparent laser-marking sheet 1 (1A, 1B), the multilayer sheet for core 6, the sheet made of polyester elastomer or the like, or the polyester mesh cloth. Typically the desired time is about from 10 seconds to 6 minutes, the desired pressure is from 1 to 20 MPa and the desired temperature is from 120 to 170°C as an example. The time less than 10 seconds may lead to a failure in the formation of a laminate that is integrated reliably, and the time exceeding 6 min. may not lead to the effect corresponding to the time, and so the production efficiency deteriorates unfavorably. The pressure less than 1 MPa may lead to a failure in stacking, and the pressure exceeding 20 MPa affects the dimension accuracy of the laminate unfavorably. The temperature less than 120°C may lead to a failure in stacking similar to the case of too low pressure, and the temperature exceeding 170°C may cause warpage or contraction of the laminate, or burning of images, letters or the like printed at the core layer unfavorably.

### (Five-layered laminate)

As described above, a laser-marking sheet for electronic passport is preferably configured as a five-layered laminate including a transparent laser-marking sheet 1 (1A, 1B)/a multilayer sheet for core 6/a binding sheet 10/a multilayer sheet for core 6/a transparent laser-marking sheet 1 (1A, 1B). That is, it is configured as a laminate of the transparent laser-marking sheet 1 (1A, 1B)/the multilayer sheet for core 6, whereby two-layered lamination structure including at least transparent laser-marking sheet and a coloring sheet (including a white sheet) can be obtained, and a contrast ratio in laser marking can be improved more as compared with the laminate including a transparent laser-marking layer and a white layer, and can improve clarity of letters, figures, symbols, information or the like.

Further, such a configuration of the five-layered laminate including a transparent laser-marking sheet 1 (1A, 1B)/a multilayer sheet for core 6/a binding sheet 10/a multilayer sheet for core 6/a transparent laser-marking sheet 1 (1A, 1B) enables laser marking either from a surface and/or from a rear face. Further, when this five-layered laminate is thermal fusion bonded for integration by hot press forming, the obtained five-layered laminate sheet hardly generates warpage. Herein, as for a thickness of each layer, the transparent laser-marking sheet 1 (1A, 1B) preferably has a thickness of 50 to 200 µm, the multilayer sheet for core 6 preferably has a thickness of 50 to 200 µm, and the binding sheet 10 preferably has a thickness of 50 to 500 µm as described above in details.

More preferably, it is a five-layer lamination structure including a transparent laser-marking sheet/a multilayer sheet for core/a binding sheet/a multilayer sheet for core/a transparent laser-marking sheet, and the base-material sheet making up the transparent laser-marking sheet has a three-layered structure a stated above.

The five-layer laminate as stated above can be manufactured by various methods. For instance, after stacking the transparent laser-marking sheet 1 (1A, 1B)/multilayer sheet for core 6/binding sheet 10/multilayer sheet for core 6/transparent laser-marking sheet 1 (1A, 1B), they are thermal fusion bonded (thermal lamination) by hot press, whereby a five-layered laminate can be manufactured.

### (Printing method for five-layered laminate)

When printing is to be performed to the above-stated laminate, after performing UV offset printing or UV silk printing to one face of the multilayer sheet for core 6, the transparent laser-marking sheet 1 (1A, 1B)/the printed multilayer sheet for core/the binding sheet 10/the printed multilayer sheet for core/the transparent laser-marking sheet 1 (1A, 1B) are stacked, followed by thermal fusion bonding (thermal lamination) by hot press. As another method, after the multilayer sheet for core 6/the binding sheet 10/the multilayer sheet for core 6 are stacked by thermal fusion bonding by hot pressing, and then UV offset printing or UV silk printing is performed on the surface of this hot-pressed laminate. Then this printed laminate and the transparent laser-marking sheets 1 (1A, 1B) may be stacked so as to be the transparent laser-marking sheet 1 (1A, 1B)/(the multilayer sheet for core 6/binding sheet 10/multilayer sheet for core 6) laminate/the transparent laser-marking sheet 1 (1A, 1B), followed by hot pressing. For the stacking and hot pressing, the sheets are disposed so that the face of each transparent laser-marking sheet 1 (1A, 1B) where the adhesive layer is formed is brought into contact with the printed face of the multilayer sheet for core subjected to the printing.

Herein preferable UV ink that can be used in the present invention is ink that causes a photochemical reaction to be cured (dried) in response to energy of UV rays applied (UV-curable ink). In the present invention, photo-polymerized resin, photo-polymerization initiator, pigments and other components making up the UV ink are not limited, as long as it is UV ink. Any known ink can be used, and the ink is not limited especially. Such UV ink is cured (dried) shortly, and printing by UV ink is excellent in chemical resistance and wear resistance. In the present invention, ink based on other curing methods, such as permeation curing (drying), heating/evaporation curing (drying), oxidative polymerization and the like are not preferable.

The offset printing in the present invention is a conventionally known printing method. Specifically ink is transferred from a plate to a member to be printed (multilayer sheet for core) via a blanket. For this offset printing, the type of the blanket, the presence or not of damping water or the like is not limited especially.

The UV silk printing also is a conventionally known printing method similarly to the offset printing. Specifically silk cloth is used for a plate material, and an appropriate amount of ink is pushed out through the silk by rubbing it with a spatula, and the ink is placed on a member to be printed (multilayer sheet for core) via a gap of a pattern. For this silk printing also, various methods, for example, can be used, which are used in the field of this silk printing. They are not limited especially.

According to the UV silk printing, printing of delicate color tone that is stereoscopic and is close to the actual image can be performed, and according to the offset printing, multi-color printing is easily performed, and the printing at favorable cost is enabled, and so the UV silk printing and the UV offset printing are preferable to intaglio printing and letterpress printing.

In another method, the UV offset printing or the UV silk printing may be performed on one face of the multilayer sheet for core 6 as stated above, and then a light coating of varnish as a type of adhesive may be applied to the printed face and may be dried as needed, and then the transparent laser-marking sheet 1 (1A, 1B)/varnish applied and printed multilayer sheet for core/the binding sheet 10/varnish applied and printed multilayer sheet for core/the transparent laser-marking sheet 1 (1A, 1B) may be stacked and hot pressed. Such varnish applied at the printed face is expected to enable firmer bonding with the adhesive layer of the transparent laser-marking sheet 1 (1A, 1B).

Further, a thermoplastic or thermosetting adhesive of 0.1 to 20 µm in thickness may be applied beforehand to one face or both faces of the multilayer sheet for core 6 and the binding sheet 10, and then a transparent laser-marking sheet 1 (1A, 1B)/the multilayer sheet for core 6/the binding sheet 10/the multilayer sheet for core 6/a transparent laser-marking sheet 1 (1A, 1B) may be stacked and then may be subjected to thermal lamination (thermal fusion bonding), or after stacking a transparent laser-marking sheet 1 (1A, 1B)/the multilayer sheet for core 6/the binding sheet 10/the multilayer sheet for core 6/a transparent laser-marking sheet 1 (1A, 1B), dry lamination (press bonding) may be performed. In the thermal lamination or the dry lamination, known devices or methods can be used.

When printing is performed to such a laminate sheet, after performing UV offset printing or UV silk printing to one face of the multilayer sheet for core 6, a transparent laser-marking sheet 1 (1A, 1B)/the printed multilayer sheet for core/a binding sheet 10/the printed multilayer sheet for core/a transparent laser-marking sheet 1 (1A, 1B) are stacked, and then may be hot pressed for thermal lamination more preferably. Alternatively, after UV offset printing or UV silk printing may be performed on one face of the multilayer sheet for core 6, a light coating of varnish as a type of adhesive may be applied to the printed face and may be dried as needed, and then the transparent laser-marking sheet 1 (1A, 1B)/varnish applied and printed multilayer sheet for core/the binding sheet 10/varnish applied and printed multilayer sheet for core/the transparent laser-marking sheet 1 (1A, 1B) may be stacked and subjected to thermal lamination, whereby a laser-marking sheet for electronic passport is formed. Thereby, convenience, such as easy forming, can be improved.

In the case of thermal lamination, the temperature for hot pressing, which varies with the types of the sheets making up the laser-marking sheet for electronic passport, is from 100 to 170°C and preferably from 130 to 160°C. A hot press temperature less than 100°C may cause an adhesion failure, and a hot press temperature exceeding 170°C may cause defects such as warpage or shrinkage of the five-layer laminate sheet or extending off of a sheet unfavorably.

Further a laser-marking sheet for electronic passport including, between the multilayer sheet for core 6 and the binding sheet 10 as stated above, a sheet made of copolymer polyester resin, which is polyester composed of a dicarboxylic acid unit having mainly a telephthalate unit, an ethylene glycol unit (I) and a glycol unit having mainly 1,4-cyclohexane dimethanol unit (II), where the ethylene glycol unit (I) and the 1,4-cyclohexane dimethanol unit (II) have a relationship such that (I)/(II) is 90 to 30/10 to 70 mol%, or another adhesive thermoplastic resin sheet is also preferable. Specifically, it is configured by stacking seven layers of a transparent laser-marking sheet (1A, 1B)/a multilayer sheet for core 6/a sheet made of copolymer polyester resin or another adhesive thermoplastic resin sheet/a binding sheet/a sheet made of copolymer polyester resin or another adhesive thermoplastic resin sheet/a multilayer sheet for core/transparent laser-marking sheet (1A, 1B). In one of the preferable embodiments for the laser-marking sheet for electronic passport, the sheet made of copolymer polyester resin or another adhesive thermoplastic resin sheet has a thickness of 50 to 300 µm, and is subjected to matting with the average roughness (Ra) of 0.1 to 5 µm.

In this way, a sheet made of desired copolymer polyester resin and another adhesive thermoplastic resin sheet are stacked between a multilayer sheet for core and a binding sheet and between a binding sheet and a multilayer sheet for core, whereby the binding sheet and the other sheet are integrated, and so when a laser-marking sheet for electronic passport is used as an electronic passport as well, the machine-sewn cloth and the laminate with the surface or the rear face can have improved strength against peeling, and therefore it is one of preferable embodiments.

Specifically, for example, when an electronic passport is formed by machine-sewing or bonding or machine-sewing and bonding to an electronic-passport surface or rear-face using the protruding portion 11 of the binding sheet as described later, if peeling is performed between the binding sheet and the multilayer sheet artificially, forgery can be performed by peeling off this portion and re-bonding with another sheet, which poses a big problem. The above-stated configuration, however, can prevent artificial peeling because the binding sheet and the other sheet are integrated more, which is effective to prevent the forgery of an electronic passport.

Further the laser-marking sheet for electronic passport as stated above is configured as a five-layered laminate including a transparent laser-marking sheet/multilayer sheet for core/inlet sheet/multilayer sheet for core/ multilayer sheet for core/the transparent laser-marking sheet as stated above, and each inlet sheet is provided with at least an IC chip and an antenna at the binding sheet. Alternatively, the inlet sheet is configured by stacking, above and/or under the binding sheet, copolymer polyester resin, which is polyester composed of a dicarboxylic acid unit having mainly a telephthalate unit, an ethylene glycol unit (I) and a glycol unit having mainly 1,4-cyclohexane dimethanol unit (II), where the ethylene glycol unit (I) and the 1,4-cyclohexane dimethanol unit (II) have a relationship such that (I)/(II) is 90 to 30/10 to 70 mol%, and is provided with an IC chip and an antenna. Herein, the laser-marking sheet for electronic passport is preferably configured so that the total thickness of the laminate sheet after stacking is smaller than the total thickness of the sheets before stacking. This is for making it easy to provide the IC chip and the antenna, which can be a so-called IC-chip embedded type laser-marking sheet for electronic passport.

For instance, a laser-marking sheet for electronic passport can include the sheets having desired configurations as stated above, including a transparent laser-marking sheet of 50 to 200 µm, a multilayer sheet for core of 50 to 200 µm, and an inlet sheet of 200 to 400 µm in thickness before stacking, where the total thickness of the laser-marking sheet for electronic passport after stacking is smaller than the total thickness of the transparent laser-marking sheet, the multilayer sheet for core and the inlet sheet.

As another example, a laser-marking sheet for electronic passport can include the sheets having desired configurations as stated above, including the transparent laser-marking sheet of 50 to 200 µm, the multilayer sheet for core of 50 to 200 µm, and the inlet sheet of 200 to 400 µm in thickness before stacking, where a protruding portion is provided at one end of the binding sheet, having a length longer than those of the transparent laser-marking sheet and the multilayer sheet for core by 5 to 100 mm. Using (via) the protruding portion, the inlet sheet may be incorporated to an electronic passport by machine-sewing or bonding or by machine-sewing and bonding in one example.

Herein, the aforementioned IC-chip embedded type (so-called IC-chip model) laser-marking sheet for electronic passport can be manufactured as follows, for example. (1) Firstly, the sheets including a transparent laser-marking sheet, a multilayer sheet for core, and a binding sheet are manufactured by the methods as stated above. (2) Next, a layer made of copolymer polyester resin, which is polyester composed of a dicarboxylic acid unit having mainly a telephthalate unit, an ethylene glycol unit (I) and a glycol unit having mainly 1,4-cyclohexane dimethanol unit (II), where the ethylene glycol unit (I) and the 1,4-cyclohexane dimethanol unit (II) have a relationship such that (I)/(II) is 90 to 30/10 to 70 mol%, is formed above and under the binding sheet. (3) The thus obtained copolymer polyester resin layer/binding sheet/copolymer polyester resin layer are hot pressed, thus forming a laminate. (4) Further an IC chip and an antenna are provided on the laminate after hot pressing.

Next, (5) a layer made of copolymer polyester resin, which is polyester composed of a dicarboxylic acid unit having mainly a telephthalate unit, an ethylene glycol unit (I) and a glycol unit having mainly 1,4-cyclohexane dimethanol unit (II), where the ethylene glycol unit (I) and the 1,4-cyclohexane dimethanol unit (II) have a relationship such that (I)/(II) is 90 to 30/10 to 70 mol%, is formed so as to cover the IC chip and the antenna. As stated above, the layer made of the copolymer polyester resin as stated above is formed so as to cover the IC chip and the antenna, damage on the IC chip and the antenna due to stress, heat or the like during hot pressing can be prevented favorably.

Thereafter, (6) hot press is performed so as to form the inlet sheet. (7) Further the inlet sheet, the transparent laser-marking sheet and the multilayer sheet for core as stated above are used to form a five-layer laminate including the transparent laser-marking sheet/multilayer sheet for core/inlet sheet/multilayer sheet for core/transparent laser-marking sheet, whereby the aforementioned IC-chip embedded type (so-called IC-chip model) laser-marking sheet for electronic passport can be formed. The manufacturing method as stated above is just an example, and the method is not limited to this especially.

Herein, instead of the "copolymer polyester resin, which is polyester composed of a dicarboxylic acid unit having mainly a telephthalate unit, an ethylene glycol unit (I) and a glycol unit having mainly 1,4-cyclohexane dimethanol unit (II), where the ethylene glycol unit (I) and the 1,4-cyclohexane dimethanol unit (II) have a relationship such that (I)/(II) is 90 to 30/10 to 70 mol%" to form a layer so as to cover the IC chip and the antenna during the manufacturing of the IC-chip embedded type (so-called IC-chip model) laser-marking sheet for electronic passport, an adhesive sheet, for example, also is used preferably. This can not only eliminate the hot press step to form the inlet sheet performed later, but also reduce damage on the IC chip and the antenna due to stress, heat or the like that tend to be applied during excessive hot pressing. An example of such an adhesive sheet, but not limited to this, includes a polyester adhesive sheet of about 30 µm in thickness (e.g., "Aron Melt PES-111EE sheet", product name, produced by Toa Gosei Co., Ltd.).

When the "copolymer polyester resin, which is polyester composed of a dicarboxylic acid unit having mainly a telephthalate unit, an ethylene glycol unit (I) and a glycol unit having mainly 1,4-cyclohexane dimethanol unit (II), where the ethylene glycol unit (I) and the 1,4-cyclohexane dimethanol unit (II) have a relationship such that (I)/(II) is 90 to 30/10 to 70 mol%" or the adhesive sheet as stated above is used for the inlet sheet so as to cover the IC chip and the antenna as well, the thickness of the inlet sheet is desirably within the aforementioned desired range as a whole.

The transparent laser-marking sheet in the present embodiment can be used preferably for an electronic passport.

For instance, when the sheet is used for an electronic passport, two of the transparent laser-marking sheets in the present embodiment are prepared, and a binding sheet, which is to facilitate the binding of the transparent laser-marking sheets, is disposed between these sheets, and a machine-sewing portion is formed as needed. Then a surface, the laminate based on the present embodiment, a visa sheet, an IC chip and the like may be disposed, thus preparing the electronic passport. This is just one example, and the configuration is not always limited to this.

The transparent laser-marking sheet in the present embodiment can be used preferably for a plastic card.

Examples of the plastic card, to which the transparent laser-marking sheet of the present invention is applicable, include, but not limited, a prepaid card, a membership card, an ID card, a telephone card, a commuter pass, and a cash card.

For instance, a transparent laser-marking sheet provided with a transparent thermal activation adhesive layer made of polyester resin is bonded to one or both of the faces of a plastic information-medium sheet making up a plastic card. During this bonding, an adhesive layer provided at the transparent laser-marking sheet is brought into contact with the plastic information-medium sheet for heating and stacking for integration. At this time, the transparent thermal activation adhesive made of polyester resin provided at the transparent laser-marking sheet can be bonded firmly without softening or deforming the plastic information-medium sheet making up the plastic card. The plastic card is used while taking out or putting into a card case or a bag frequently, and is made to pass through a machine for data reading.

Since the transparent laser-marking sheet provided with a transparent thermal activation adhesive layer made of polyester resin as stated above is firmly bonded with the plastic information-medium sheet, peeling does not likely occur. Further, the transparent laser-marking sheet has high degree of transparency, and therefore it has excellent visibility of information printed on the plastic information-medium sheet, and letter, figures, symbols, information or the like can be marked clearly by laser marking.

### (Matting)

It is preferable that the surface of at least one of the transparent laser-marking sheet, the multilayer sheet for core, and the other sheet is subjected to matting with the average roughness (Ra) of 0.1 to 5 µm. The reason why the sheet surfaces of the aforementioned respective sheets are subjected to matting selectively as needed is because, for example, in the case of the hot press forming of the transparent laser-marking sheet/the other sheet of the present embodiment, the matting allows the air between the transparent laser-marking sheet and the other sheet to be easily come out, and the same applies to the other sheet. When the sheets without matting are conveyed to the stacking step, a trouble tends to occur, e.g., when a sheet without matting is sucked/vacuumed, aligned and stacked, and thereafter when air is injected to detach the sheet, a problem tends to occur, for example, it may be difficult to detach the sheet, or misalignment in the stacking occurs even when the sheet can be detached.

The average roughness (Ra) of the matting exceeding 5µm tends to degrade thermal adhesiveness between the transparent laser-marking sheet and the other sheet of the present embodiment. Further, matting can be selected as needed, whereby adjustment for the sheet as a whole can be performed favorably. The average roughness (Ra) of the surface less than 0.1 µm leads to a tendency of causing a problem of sticking of the sheet to the conveying apparatus during conveyance or stacking of the sheet as described above.

Further, it is preferable that the laser-marking sheet for electronic passport as stated above is used, and this is machine-sewn or bonded, or machine-sewn and bonded with a cover or a back cover of the electronic passport to form an electronic passport using a protruding portion of the binding sheet in a five-layer laminate sheet including transparent laser-marking sheet/multilayer sheet for core/binding sheet/multilayer sheet for core/transparent laser-marking sheet, a five-layer laminate sheet including transparent laser-marking sheet/multilayer sheet for core/inlet sheet/multilayer sheet for core/transparent laser-marking sheet, or a seven-layer laminate sheet including transparent laser-marking sheet/multilayer sheet for core/another sheet/binding sheet/another sheet/multilayer sheet for core/transparent laser-marking sheet. This configuration is preferable because an electronic passport can be easily formed.

### [III] Laser-marking method

A transparent laser-marking sheet in the present embodiment produces a color by applying laser-light energy thereto. Examples of the laser-light energy include a gas laser such as He-Ne laser, Ar laser, CO₂ laser, or excimer laser; a solid laser such as YAG laser or Nd·YVO₄ laser; semiconductor layer; and pigment laser. Among them, YAG laser and Nd·YVO₄ laser are preferable.

In the laser-marking method of the present embodiment, a laser beam as the laser-light energy may be in a single mode or a multi mode. The laser beam having a narrow beam diameter such as 20 to 40 µm as well as a wide beam diameter of 80 to 100 µm may be used. Herein, a laser beam having a beam diameter of 20 to 40 µm in a single mode is preferable because contrast between printed letters, for example, by laser marking and the background can be 3 or more, and the printing quality with good contrast can be obtained.

In this way, when laser-light energy is applied to the transparent laser-marking sheet of the present embodiment, a laser-light energy absorbing agent included in the base-material sheet (single-layer sheet, or a core layer in a multilayer sheet) absorbs the laser-light energy and produces a color. Since this transparent laser-marking sheet is made of polycarbonate resin of high thermal resistance as a main component, high-power laser-light energy can be applied thereto. As a result, letters, figures, symbols, information or the like can be marked easily and more clearly.

Further when the base-material sheet is configured as a multilayer sheet as stated above, the phenomenon "swelling" can be suppressed due to the action of the skin layers of the multilayer sheet even under the condition of causing "foaming" due to the irradiation with higher-power laser-light energy in a single-layer sheet, and causing the phenomenon "swelling" at the sheet surface due to this foaming. Therefore, letters, figures, symbols, information or the like can be marked more clearly. The action of these skin layers is not limited to this. In the case of a single-layer sheet, the laser-marking portion will be directly ground by external friction. On the contrary, the skin layers, if provided, will be ground, but the laser-marking portion will not be ground. Therefore, the laser-marking portion can have more excellent wear resistance.

Further, since the sheet made of polycarbonate resin has high thermal resistance, a thermal fusion bonding of the multilayer sheet thereof has to be performed at a high temperature ranging from 200 to 230°C. A problem further arises in the productivity of the hot press step. Additionally, various printing is typically performed on an intermediate layer called an inlay sheet in a plastic data sheet of an electronic passport. When printing is performed on the inlay sheet, and then thermal fusion bonding is performed at a high temperature ranging from 200 to 230°C during the hot press step of the multilayer stacking, the printing often is "burned". Printed letters and images may change in color, which is therefore not preferable.

To cope with this problem, a coloring three-layered sheet including skin layer/core layer (colored)/skin layer is stacked at the multilayer sheet for core as a base layer of a transparent laser-marking sheet made up of a base-material sheet configured as the single-layer sheet as stated above or a transparent laser-marking sheet made up of a base-material sheet configured as the multilayer-sheet as stated above. Thereby, the skin layers have a glass-transition temperature at about 80°C, which is lower than a glass-transition temperature of a polycarbonate resin of the core layer by about 60 to 70°C. Therefore, the thermal fusion bonding can be performed at a temperature at 150 to 170°C, whereby the temperature can be reduced by about 50 to 60°C. This can lead to the effect of suppressing a change in color of the printed letters or images in the multilayer sheet for core. Accordingly, the transparent laser-marking sheet of the present embodiment has excellent clarity of printed letters, for example, by laser marking, and when laser-light energy is applied to the surface layer or a core layer of the surface layer to produce a black color for marking of letters, figures, symbols, or information, clearer letters, figures, symbols or information can be marked due to black/white contrast because the base layer is white.

More preferably a method for laser-making to the transparent laser-marking sheet as stated above is to perform printing by applying laser-light energy from the side of the transparent laser-marking sheet (the opposite of the face where the adhesive layer is formed). In this way, desired laser-light energy is applied from the base-material sheet side of the transparent laser-marking sheet, whereby letters, figures, symbols, information or the like can be marked easily and clearly. Therefore, the transparent laser-marking sheet of the present embodiment is excellent in laser markability and thermal adhesiveness, and the laser-marking portion is excellent in wear resistance.

More preferably, in the method for laser-making to perform laser-marking of the transparent laser-marking sheet as stated above, the transparent laser-marking sheet and a printed sheet subjected to UV offset printing or UV silk printing are integrated, and then laser-light energy is applied toward the face where the adhesive layer is not formed so as to laser-mark letters, figures, symbols or information. Laser-light energy is applied from the side where the adhesive layer is not formed, whereby letters, figures, symbols or information can be marked, the marked letters, figures, symbols or information has high contrast between the background section and the laser-marking section, clear laser-marking can be obtained, and the resultant is excellent in prevention of forgery, falsification and the like.

The aforementioned transparent thermal activation adhesive made of polyester resin is formed on at least one of the faces of the base-material sheet beforehand, whereby the operation to form a predetermined amount of the transparent thermal activation adhesive at a predetermined thickness on the base-material sheet at the site can be eliminated. Therefore, the method has high versatility and can facilitate forming. The aforementioned transparent thermal activation adhesive made of polyester resin that is formed on at least one of the faces of the base-material sheet does not adversely affect the laser-markability when letters, figures, symbols or information are marked by irradiation with laser-light energy. That is, contrast or clarity of the laser-marked letters, figures, symbols or information is not degraded. Further, the bonding effect of the adhesive layer is not degraded or the color does not change even when laser-light energy is applied.

### (Examples)

Hereinafter the present invention will be described more specifically by way of Examples. However, the present invention is not limited to the Examples. Various evaluations and measurements in Examples and Comparative Examples were carried out by the following methods.

### [1] Transparency of transparent laser-marking sheet:

For the transparent laser-marking sheets used in Examples 1 to 5 and Comparative Examples 1 to 6, the whole beam transmittance of the sheets was measured by a spectrophotometer (trade name "EYE7000" produced by GretagMacbeth GmbH). Evaluations were made based on the following criteria.

### <<Judgment Criteria>>

Excellent: whole beam transmittance of 80% or greater, the whole beam transmittance was very good,
Good: whole beam transmittance of 60% or greater and less than 80%, the whole beam transmittance was good, and
Bad: whole beam transmittance less than 60%, the whole beam transmittance was bad.

### [2] Adhesiveness between transparent thermal activation adhesive and base-material sheet:

For the transparent laser-marking sheets used in Examples 1 to 5 and Comparative Examples 1 to 4, adhesiveness between the transparent thermal activation adhesive and the base-material sheet was observed by cross-cut testing (25 squares) in keeping with JIS K 5600, and evaluations were made based on the following criteria.

### <<Judgment Criteria>>

Excellent: No peeling occurred, very good adhesiveness,
Good: Very small peeling only at 5 positions or less, good adhesiveness, Poor: Small peeling at about 10 positions, normal adhesiveness,
Bad: Small peeling at 10 to 20 positions or more, bad adhesiveness, and
Very Bad: peeling at the entire face, very bad adhesiveness

### [3] Thermal adhesiveness:

For the transparent laser-marking sheets used in Examples 1 to 5 and Comparative Examples 1 to 6, thermal adhesiveness between the transparent laser-marking sheets A1, A2 or A3 and the printed multilayer sheets B was evaluated based on the following criteria.

### <<Judgment Criteria>>

Excellent: No peeling occurred, thermal adhesiveness was excellent and very good,
Good: Peeling occurred very partly, but the facture mode was material fracture, and thermal adhesiveness was good,
Poor: Peeling occurred with a relatively strong force, normal thermal adhesiveness, and
Bad: Peeling occurred at the entire face with a small force, bad thermal adhesiveness

### [4] Laser markability:

For the transparent laser-marking sheets obtained at Examples 1 to 5 and Comparative Examples 1 to 6, laser-markability was evaluated using Nd·YVO₄ laser (trade name "LT-100SA", produced by Laser Technology Inc. and trade name "RSM10E" produced by Rofin-Sinar technologies Inc.). Specifically, marking was performed at a laser-light energy irradiation rate of 400 mm/sec, and the clarity of images and the surface state of a laser-marking portion were evaluated based on the following criteria.

### <<Judgment Criteria>>

Good: Very good clarity without anomalies such as "swelling" at a laser-light energy irradiation portion, very good laser markability,
Poor: Good clarity but slight "swelling" occurred at a laser-light energy irradiation portion, and normal laser-markability, and
Bad: Good clarity but "swelling" occurred at a laser-light energy irradiation portion, and bad laser-markability

### (Manufacturing Example 1) Base-material sheet A1 (single-layer sheet):

100 parts by mass of polycarbonate resin (trade name "TARFLON FN2500A" produced by Idemitsu Kosan Co., Ltd., with a melt volume rate = 8 cm³/10min.) was used, to which 0.0015 parts by mass of carbon black (#10 produced by Mitsubishi Chemicals, Inc., with an average particle diameter of 75 nm and a DBP oil absorption of 86 ml/100 gr) as the energy absorber absorbing laser-light energy was blended. Further 0.1 parts of n-octadesyl-3-(3,5-di-t-butyl-4-hydroxyphenyl)propionate (trade name "Irganox 1076" produced by Ciba Specialty Chemicals Inc.) as the phenol antioxidant, and 0.2 parts by mass of 2-(2'-hydroxy-3',5'-di-t-butylphenyl)-5-chlorobenzotriazole (trade name "Tinuvin 327" produced by Ciba Specialty Chemicals Inc.) as the ultraviolet absorber were blended, and a base-material sheet A1 (single-layer sheet) was obtained by T-die extrusion to be 100 µm in single-layer thickness.

### (Manufacturing Example 2) Base-material sheet A2 (multilayer sheet):

As a skin layer, to 100 parts by mass of noncrystalline polyester resin (trade name "Easter GN071" produced by Eastman Chemical Company, with EG/CHDM (ethylene glycol unit/1,4-cyclohexane dimethanol unit, the same applies hereinafter) = 70/30 mol%), 0.1 parts by mass of calcium stearate as a lubricant was blended. As a core layer, 100 parts by mass of polycarbonate resin (trade name "TARFLON FN2500A" produced by Idemitsu Kosan Co., Ltd., with a melt volume rate = 8 cm³/10min.) was used, and 0.0015 parts by mass of carbon black (#10 produced by Mitsubishi Chemicals, Inc., with an average particle diameter of 75 nm and a DBP oil absorption of 86 ml/100 gr) as the energy absorber absorbing laser-light energy was blended. Further 0.1 parts of (n-octadesyl-3-(3,5-di-t-butyl-4-hydroxyphenyl)propionate ("Irganox 1076" produced by Ciba Specialty Chemicals Inc.) as the phenol based antioxidant and 0.2 parts by mass of 2-(2'-hydroxy-3',5'-di-t-butylphenyl)-5-chlorobenzotriazole (trade name "Tinuvin 327" produced by Ciba Specialty Chemicals Inc.) as the ultraviolet absorber were blended, and a transparent laser-marking multilayer sheet A2 including three layers of skin layer/core layer/skin layer was obtained by T-die co-extrusion. The total thickness of the sheet was 100 µm with the skin layers on the front and rear faces having the same thickness, and the layers had a configuration of the skin layer (16 µm)/the core layer (68 µm)/the skin layer (16 µm) so that the ratio of the thickness of the core layer was 68%, whereby the base-material sheet A2 (multilayer sheet) was obtained.

### (Manufacturing Example 3) Multilayer sheet for core:

As a skin layer, to 100 parts by mass of noncrystalline polyester resin (trade name "Easter GN071" produced by Eastman Chemical Company, with EG/CHDM = 70/30 mol%), 0.1 parts by mass of calcium stearate as a lubricant and 15 parts by mass of titanium oxide were blended. 100 parts by mass of polycarbonate resin (trade name "TARFLON FN2500A" produced by Idemitsu Kosan Co., Ltd., with a melt volume rate = 8 cm³/10min.) as a core layer, 0.1 parts by mass of (n-octadesyl-3-(3,5-di-t-butyl-4-hydroxyphenyl)propionate ("Irganox 1076" produced by Ciba Specialty Chemicals Inc.) as the phenol based antioxidant, 0.2 parts by mass of 2-(2'-hydroxy-3',5'-di-t-butylphenyl)-5-chlorobenzotriazole (trade name "Tinuvin 327" produced by Ciba Specialty Chemicals Inc.) as the ultraviolet absorber, and 15 parts by mass of titanium oxide were blended, and a three-layered multilayer sheet including skin layer/core layer/skin layer was obtained by T-die co-extrusion. The total thickness of the sheet was 300 µm with the skin layers on the front and rear faces having the same thickness. The layers had a configuration of the skin layer (40 µm)/the core layer (220 µm)/the skin layer (40 µm) so that the ratio of the thickness of the core layer was 73%. Further, matting was performed so that the average surface roughness (Ra) of the both faces was 0.5 to 1.8 µm to obtain a multilayer sheet for core. Printing was performed by UV offset printing on one of the faces of this multilayer sheet for core.

### (Example 1)

The base-material sheet A1 (single-layer sheet) obtained in Manufacturing Example 1 was used. As the transparent thermal activation adhesive used for the adhesive layer, water-dispersed polyester resin (trade name "Vylonal MD-1200" produced by Toyobo. Co., Ltd), solid content concentration: 34 mass%, butyl cellosolve: 11 mass%, number average molecular weight: 15,000, glass-transition temperature: 67°C) was prepared. On one of the faces of the base-material sheet A1, the transparent thermal activation adhesive as stated above was applied using an automatic film applicator (produced by Yasuda Seiki Seisakusyo Ltd.), followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3. Next, these sheets were stacked so as to be the configuration of the transparent laser-marking sheet/the UV offset printed multilayer sheet for core/the UV offset printed multilayer sheet for core/transparent laser-marking sheet and so that the face of the transparent laser-marking sheet where the layer of transparent thermal activation adhesive was formed and the UV offset printed face of the multilayer sheet for core was brought into contact. After stacking, this was sandwiched between two chrome-plated sheets, and was preheated using a vacuum press machine (produced by Nissei Plastic Industrial Co., Ltd.) at a preheat temperature of 100°C for 2 minutes. After preheating, this was held at the heating temperature of 160°C and with the surface pressure of 30 kg/cm² for 2 minutes (hereinafter this called "thermal fusion step"). Thereafter this was cooled to ambient temperatures, whereby a transparent laser-marking multilayer sheet was obtained. The thermal adhesiveness as stated above of this transparent laser-marking multilayer sheet was evaluated. Then, a transparent laser-marking multilayer sheet was prepared similarly to the above except that no mold release agent was used. The laser markability as stated above of this transparent laser-marking multilayer sheet was evaluated.

Similarity to Example 1, laser markability of Examples 2 to 4 and Comparative Examples 1 to 6 also was evaluated.

### (Example 2)

The base-material sheet A1 (single-layer sheet) obtained in Manufacturing Example 1 was used. As the transparent thermal activation adhesive used for the adhesive layer, polyester resin (produced by Toagosei Co., Ltd, XJ-36 (solid content concentration: 25 mass%, cyclohexanone solvent) was prepared. On one of the faces of the single-layered base-material sheet A1, the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3, and these sheets were stacked so as to be the same configuration as that of Example 1 and so that the UV offset printed face of the multilayer sheet for core was brought into contact. After stacking, this was subjected to a similar thermal fusion step, and was cooled to ambient temperatures, whereby a transparent laser-marking multilayer sheet was obtained.

### (Example 3)

The base-material sheet A2 (multilayer sheet) obtained in Manufacturing Example 2 was used (the thickness of this base-material sheet A2 was 100 µm). As the transparent thermal activation adhesive used for the adhesive layer, the same water-dispersed polyester resin as that used in Example 1 was prepared. On one of the faces of the base-material sheet A2 (multilayer sheet), the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the printed multilayer sheet for core prepared in Manufacturing Example 3, and these sheets were stacked so as to be the same configuration as that of Example 1 and so that the UV offset printed face of the multilayer sheet for core was brought into contact. After stacking, this was subjected to a similar thermal fusion step, and was cooled to ambient temperatures, whereby a transparent laser-marking multilayer sheet was obtained.

### (Example 4)

The base-material sheet A1 (single-layer sheet) obtained in Manufacturing Example 1 was used. As the transparent thermal activation adhesive used for the adhesive layer, water-dispersed polyester resin (solid content concentration: 20 mass%, ethyl cellosolve/butyl cellosolve mixture solvent (mass ratio 1/1), number average molecular weight: 5,000, glass-transition temperature: 80°C) was prepared. Similarly to Example 1, on one of the faces of the base-material sheet A1, the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3, and these sheets were stacked so as to be the same configuration as that of Example 1 and so that the UV offset printed face of the multilayer sheet for core was brought into contact. After stacking, this was subjected to a similar thermal fusion step, and was cooled to ambient temperatures, whereby a transparent laser-marking multilayer sheet was obtained.

### (Example 5)

The base-material sheet A1 (single-layer sheet) obtained in Manufacturing Example 1 was used. As the transparent thermal activation adhesive used for the adhesive layer, water-dispersed polyester resin (solid content concentration: 20 mass%, ethyl cellosolve/butyl cellosolve mixture solvent = 1/1 (mass ratio), number average molecular weight: 25,000, glass-transition temperature: 80°C) was prepared. Similarly to Example 1, on one of the faces of the base-material sheet A1, the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3, and these sheets were stacked so as to be the same configuration as that of Example 1 and so that the UV offset printed face of the multilayer sheet for core was brought into contact. After stacking, this was subjected to a similar thermal fusion step, and was cooled to ambient temperatures, whereby a transparent laser-marking multilayer sheet was obtained.

### (Comparative Example 1)

The base-material sheet A1 (single-layer sheet) obtained in Manufacturing Example 1 was used. As the transparent thermal activation adhesive used for the adhesive layer, vinyl chloride-vinyl acetate copolymer (produced by Nissin Chemical Industry Co., Ltd., product name "Solbin CN" (solid content concentration: 20 mass%, ethyl cellosolve/butyl cellosolve/dioxane mixture solvent = 1/1/2 (mass ratio), vinyl chloride-vinyl acetate content =89/11 (mass ratio), degree of polymerization =750)) was prepared. Similarly to Example 1, on one of the faces of the base-material sheet A1, the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3, and these sheets were stacked so as to be the same configuration as that of Example 1 and so that the UV offset printed face of the multilayer sheet for core was brought into contact. After stacking, this was subjected to a similar thermal fusion step, and was cooled to ambient temperatures, whereby a transparent laser-marking multilayer sheet was obtained.

### (Comparative Example 2)

The base-material sheet A1 (single-layer sheet) obtained in Manufacturing Example 1 was used. As the transparent thermal activation adhesive used for the adhesive layer, acrylic resin emulsion (produced by Shin-Nakamura Chemical Co., Ltd., product name "Newcoat MT-1177B", solid content concentration: 45 mass%, ethyl cellosolve/butyl cellosolve mixture solvent = 1/1 (mass ratio)) was prepared. Similarly to Example 1, on one of the faces of the single-layered base-material sheet A1, the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3, and these sheets were stacked so as to be the same configuration as that of Example 1 and so that the UV offset printed face of the multilayer sheet for core was brought into contact. After stacking, this was subjected to a similar thermal fusion step, and was cooled to ambient temperatures, whereby a transparent laser-marking multilayer sheet was obtained.

### (Comparative Example 3)

The base-material sheet A1 (single-layer sheet) obtained in Manufacturing Example 1 was used. As the transparent thermal activation adhesive used for the adhesive layer, vinyl chloride-acrylic copolymer emulsion (produced by Nissin Chemical Industry Co., Ltd., product name "Vinyblan 690", vinyl chloride/acrylic content=80/20 (mass ratio), solid content concentration: 54 mass%) was diluted with ethyl cellosolve/butyl cellosolve mixture solvent (mass ratio = 1/1) so that the solid content concentration was 20 mass%. Similarly to Example 1, on one of the faces of the base-material sheet A1, the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3, and these sheets were stacked so as to be the same configuration as that of Example 1 and so that the UV offset printed face of the UV offset printed multilayer sheet for core was brought into contact. After stacking, this was subjected to a similar thermal fusion step, and was cooled to ambient temperatures, whereby a transparent laser-marking multilayer sheet was obtained.

### (Comparative Example 4)

The base-material sheet A2 (multilayer sheet) obtained in Manufacturing Example 2 was used. As the transparent thermal activation adhesive used for the adhesive layer, the same one as that used in Comparative Example 1 was prepared. Similarly to Example 1, on one of the faces of the base-material sheet A2, the transparent thermal activation adhesive was applied using an automatic film applicator, followed by drying so that a transparent laser-marking sheet was obtained, provided with the layer of the transparent thermal activation adhesive of 6 to 8 µm in thickness after drying. Mold release agent was applied to one end of this transparent laser-marking sheet and the UV offset printed multilayer sheet for core prepared in Manufacturing Example 3, and these sheets were stacked so as to be the same configuration as that of Example 1 and so that the UV offset printed face of the UV offset printed multilayer sheet for core was brought into contact. After stacking, this was subjected to a similar thermal fusion step, and was cooled to ambient temperatures, whereby a transparent laser-marking multilayer sheet was obtained.

### (Comparative Example 5)

The base-material sheet A1 (single-layer sheet) obtained in Manufacturing Example 1 was used. Mold release agent was applied to one end of this base-material sheet (transparent laser-marking sheet without adhesive layer formed) and the UV offset printed multilayer sheet prepared in Manufacturing Example 3. Next, this transparent laser-marking sheet without adhesive layer formed and the multilayer sheet were stacked so as to be the same configuration as that of Example 1 and so that the UV offset printed face of the multilayer sheet was brought into contact. After stacking, this was subjected to a similar thermal fusion step, and was cooled to ambient temperatures, whereby a transparent laser-marking multilayer sheet was obtained.

### (Comparative Example 6)

The base-material sheet A2 (multilayer sheet) obtained in Manufacturing Example 2 was used. Mold release agent was applied to one end of this base-material sheet (transparent laser-marking sheet without adhesive layer formed) and the UV offset printed multilayer sheet for core prepared in Manufacturing Example 3. Next, this transparent laser-marking sheet without adhesive layer formed and the multilayer sheet were stacked so as to be the same configuration as that of Example 1 and so that the UV offset printed face of the multilayer sheet was brought into contact. After stacking, this was subjected to a similar thermal fusion step, and was cooled to ambient temperatures, whereby a transparent laser-marking multilayer sheet was obtained.

**[Table 1]**

| | Ex. 1 | Ex. 2 | Ex. 3 | Ex. 4 | Ex. 5 |
|---|---|---|---|---|---|
| Types of base-material sheet | A1 | A1 | A2 | A1 | A1 |
| Types of transparent thermal activation adhesive | Water-dispersed polyester resin | Polyester resin | Water-dispersed polyester resin | Water-dispersed polyester resin | Water-dispersed polyester resin |
| Transparency | Excellent | Good | Excellent | Excellent | Good |
| Adhesiveness | Excellent | Excellent | Excellent | Excellent | Excellent |
| Thermal adhesiveness | Excellent | Excellent | Excellent | Poor | Excellent |
| Laser markability | Good | Good | Good | Poor | Good |

**[Table 2]**

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Types of base-material sheet | A1 | A1 | A1 | A2 | A1 | A2 |
| Types of transparent thermal activation adhesive | Vinyl chloride-vinyl acetate copolymer | Acrylic resin emulsion | Vinyl chloride-acrylic copolymer emulsion | Vinyl chloride-vinyl acetate copolymer | Not included | Not included |
| Transparency | Excellent | Excellent | Excellent | Excellent | Excellent | Excellent |
| Adhesiveness | Excellent | Good | Excellent | Excellent | - | - |
| Thermal adhesiveness | Bad | Bad | Bad | Bad | Bad | Bad |
| Laser markability | Bad | Bad | Bad | Bad | Bad | Bad |

### (Considerations)

As shown in Tables 1 and 2, the transparent laser-marking sheets obtained in Examples 1 to 3 and 5 included the base-material sheet to which the transparent thermal activation adhesive was firmly formed, and the adhesive did not peel in the cross-cut testing at all. Further, they were good in transparency and excellent in visibility, and their thermal adhesiveness exceeded material fracture. Even when being irradiated with laser-light energy, abnormality such as "swelling" did not occur, and marking was clear. They were usable practically for electronic passports or plastic cards. Example 4 was excellent in transparency and adhesiveness, but was a bit inferior in thermal adhesiveness and laser markability to Examples 1 to 3 and 5, which was more excellent than Comparative Examples 1 to 6.

The transparent laser-marking sheets provided with the vinyl chloride copolymer or acrylic resin transparent thermal activation adhesive obtained in Comparative Examples 1 to 4 were good in transparency and adhesiveness, but were poor in thermal adhesiveness because they generated peeling at the entire surface with a small force. Further, when being irradiated with laser-light energy, "swelling" occurred at the irradiation portion, and so they were not usable practically. The transparent laser-marking sheets, which were prepared simply by fusion of the resin between the sheets without using transparent thermal activation adhesive as in those obtained in Comparative Examples 5 to 6, were inferior in thermal adhesiveness and laser markability.

### Industrial Applicability

A transparent laser-marking sheet according to the present invention has favorable bonding effect to a printed sheet subjected to UV offset printing or UV silk printing especially, and can be used favorably for electronic passports and plastic cards.

### Description of Reference Numerals

1 (1A, 1B): Transparent laser-marking sheet, 2, 20: Base-material sheet, 3: Adhesive layer, 4: Skin layer (of base-material sheet), 5: Core layer (of base-material sheet), 6: Multilayer sheet for core, 7: Skin layer (of multilayer sheet for core), 8: Core layer (of multilayer sheet for core), 10: Binding sheet, 11: Protruding portion, 12: Machine-sewn section, 100 (100A, 100B): Laser-marking sheet for electronic passport

## Claims

1. A transparent laser-marking sheet comprising an adhesive layer on at least one of faces of a base-material sheet, wherein
the base-material sheet is configured as a single-layer sheet made of a transparent polycarbonate resin composition including polycarbonate resin and laser-light energy absorbing agent, or
the base-material sheet is configured as a multilayer sheet having skin layers and a core layer, the skin layers as both of outermost layers being made of a thermoplastic resin composition including noncrystalline polyester resin, and the core layer being made of a transparent polycarbonate resin composition including polycarbonate resin and laser-light energy absorbing agent, and
the adhesive layer is made of transparent thermal activation adhesive made of polyester resin obtained by copolymerizing a monomer having a hydrophilic functional group and is configured as a layer of 1 to 20 µm in thickness.

2. The transparent laser-marking sheet according to claim 1, wherein the polyester resin of the transparent thermal activation adhesive has number average molecular weight of 10,000 to 200,000 and has a glass-transition temperature of 20 to 100°C.

3. The transparent laser-marking sheet according to claim 1 or 2, wherein the polyester resin of the transparent thermal activation adhesive comprises water-dispersed polyester resin including a copolymer of polyester resin and a monomer having a hydrophilic functional group.

4. The transparent laser-marking sheet according to any one of claims 1 to 3, wherein the transparent thermal activation adhesive comprises aqueous dispersion, aqueous solution or organic solvent solution.

5. The transparent laser-marking sheet according to any one of claims 1 to 4, wherein the single-layer sheet or the core layer of the multilayer sheet includes, as the laser-light energy absorbing agent, at least one type selected from carbon black, titanium black, metal oxides, metal sulfides, metal nitrides, metal oxalates and metal carbonates.

6. The transparent laser-marking sheet according to any one of claims 1 to 5, wherein the single-layer sheet includes lubricant, as well as at least one type selected from antioxidant and anticolorant, and at least one type selected from UV absorbing agent and light stabilizer.

7. The transparent laser-marking sheet according to any one of claims 1 to 5, wherein the skin layers of the multilayer sheet include lubricant, as well as at least one type selected from antioxidant and anticolorant, and at least one type selected from UV absorbing agent and light stabilizer.

8. The transparent laser-marking sheet according to any one of claims 1 to 7, wherein the transparent laser-marking sheet is used for electronic passport.

9. The transparent laser-marking sheet according to any one of claims 1 to 7, wherein the transparent laser-marking sheet is used for plastic card.

10. A laminate comprising the transparent laser-marking sheet according to any one of claims 1 to 7, wherein
to the adhesive layer of the transparent laser-marking sheet, at least a printed sheet is bonded, and
the printed sheet is UV offset printed or UV silk printed.

11. A laser-marking method for laser-marking to the transparent laser-marking sheet according to any one of claims 1 to 9, wherein
after integrating the transparent laser-marking sheet and a printed sheet subjected to UV offset printing or UV silk printing, laser-light energy is applied to a face of the transparent laser-marking sheet where the adhesive layer is not formed, so as to laser-mark letters, figures, symbols or information.

## Patentansprüche

1. Transparentes Lasermarkierungssheet umfassend eine Haftmittelschicht an zumindest einer der Flächen des Basismaterialsheets, wobei
das Basismaterialsheet als ein Einzelschichtsheet hergestellt aus einer transparenten Polycarbonatharzzusammensetzung beinhaltend Polycarbonatharz und Laserlichtenergieabsorptionsmittel gestaltet ist, oder
das Basismaterialsheet als ein Mehrschichtsheet mit Hautschichten und einer Kernschicht gestaltet ist, wobei die Hautschichten als beide von am weitesten außen gelegenen Schichten aus einer nichtkristallines Polyesterharz beinhaltenden thermoplastischen Harzzusammensetzung hergestellt sind, und die Kernschicht aus einer Polycarbonatharz und Laserlichtenergieabsorptionsmittel beinhaltenden transparenten Polycarbonatharzzusammensetzung hergestellt ist, und
die Haftmittelschicht aus einem transparenten Wärmeaktivierungshaftmittel hergestellt aus Polyesterharz erhalten durch Copolymerisieren eines Monomers mit einer hydrophilen funktionellen Gruppe hergestellt ist und als eine Schicht von 1 bis 20 µm in der Dicke gestaltet ist.

2. Transparentes Lasermarkierungssheet nach Anspruch 1, wobei das Polyesterharz des transparenten Wärmeaktivierungshaftmittels ein zahlenmittleres Molekulargewicht von 10.000 bis 200.000 aufweist und eine Glasübergangstemperatur von 20 bis 100°C aufweist.

3. Transparentes Lasermarkierungssheet nach Anspruch 1 oder 2, wobei das Polyesterharz des transparenten Wärmeaktivierungshaftmittels wasserdispergiertes Polyesterharz beinhaltend ein Copolymer von Polyesterharz und ein Monomer mit einer hydrophilen funktionellen Gruppe umfasst.

4. Transparentes Lasermarkierungssheet nach einem der Ansprüche 1 bis 3, wobei das transparente Wärmeaktivierungshaftmittel eine wässrige Dispersion, eine wässrige Lösung oder eine organische Lösungsmittellösung umfasst.

5. Transparentes Lasermarkierungssheet nach einem der Ansprüche 1 bis 4, wobei das Einzelschichtsheet oder die Kernschicht des Mehrschichtsheets als das Laserlichtenergieabsorptionsmittel zumindest eine Art ausgewählt aus Carbon Black, Titanschwarz, Metalloxiden, Metallsulfiden, Metallnitriden, Metalloxalaten und Metallcarbonaten beinhaltet.

6. Transparentes Lasermarkierungssheet nach einem der Ansprüche 1 bis 5, wobei das Einzelschichtsheet Schmiermittel, sowie zumindest eine Art ausgewählt aus Antioxidans und Anticolorant und zumindest eine Art ausgewählt aus UV-Absorptionsmittel und Lichtstabilisator beinhaltet.

7. Transparentes Lasermarkierungssheet nach einem der Ansprüche 1 bis 5, wobei die Hautschichten des Mehrschichtsheets Schmiermittel, sowie zumindest eine Art ausgewählt aus Antioxidans und Anticolorant und zumindest eine Art ausgewählt aus UV-Absorptionsmittel und Lichtstabilisator beinhalten.

8. Transparentes Lasermarkierungssheet nach einem der Ansprüche 1 bis 7, wobei das transparente Lasermarkierungssheet für einen elektronischen Reisepass verwendet wird.

9. Transparentes Lasermarkierungssheet nach einem der Ansprüche 1 bis 7, wobei das transparente Lasermarkierungssheet für eine Plastikkarte verwendet wird.

10. Laminat umfassend das transparente Lasermarkierungssheet nach einem der Ansprüche 1 bis 7, wobei
an die Haftmittelschicht des transparenten Lasermarkierungssheets zumindest ein gedrucktes Sheet gebunden ist, und
das gedruckte Sheet UV-Offset-gedruckt oder UV-Sieb-gedruckt ist.

11. Lasermarkierungsmethode für Lasermarkierung des transparenten Lasermarkierungssheets nach einem der Ansprüche 1 bis 9, wobei
nach Integrieren des transparenten Lasermarkierungssheets und eines gedruckten Sheets, das dem UV-Offsetdruck oder UV-Siebdruck unterworfen wird, Laserlichtenergie an eine Seite des transparenten Lasermarkierungssheets, an dem die Haftmittelschicht nicht gebildet ist, aufgebracht wird, um Buchstaben, Figuren, Symbole oder Informationen zu lasermarkieren.

## Revendications

1. Feuille transparente pour marquage laser comprenant une couche adhésive sur au moins l'un des côtés d'une feuille de matériau de base, dans laquelle
la feuille de matériau de base est configurée comme une feuille monocouche faite d'une composition de résine de polycarbonate transparente contenant une résine de polycarbonate et un agent absorbant l'énergie de lumière laser, ou
la feuille de matériau de base est configurée comme une feuille multicouche ayant des couches de peau et une couche de coeur, les couches de peau, constituant les deux couches les plus extérieures, étant faites d'une composition de résine thermoplastique contenant une résine de polyester non cristalline, et la couche de coeur étant faite d'une composition de résine de polycarbonate transparente contenant une résine de polycarbonate et un agent absorbant l'énergie de lumière laser, et
la couche adhésive est faite d'un adhésif à activation thermique transparent fait d'une résine de polyester obtenue par copolymérisation d'un monomère ayant un groupe fonctionnel hydrophile et est configurée comme une couche ayant une épaisseur de 1 à 20 µm.

2. Feuille transparente pour marquage laser selon la revendication 1, dans laquelle la résine de polyester de l'adhésif à activation thermique transparent a une masse moléculaire moyenne en nombre de 10 000 à 200 000 et a une température de transition vitreuse de 20 à 100 °C.

3. Feuille transparente pour marquage laser selon la revendication 1 ou 2, dans laquelle la résine de polyester de l'adhésif à activation thermique transparent comprend une résine de polyester dispersée dans de l'eau contenant un copolymère de résine de polyester et d'un monomère ayant un groupe fonctionnel hydrophile.

4. Feuille transparente pour marquage laser selon l'une quelconque des revendications 1 à 3, dans laquelle l'adhésif à activation thermique transparent comprend une dispersion aqueuse, une solution aqueuse ou une solution dans un solvant organique.

5. Feuille transparente pour marquage laser selon l'une quelconque des revendications 1 à 4, dans laquelle la feuille monocouche ou la couche de coeur de la feuille multicouche contient, en tant qu'agent absorbant l'énergie de lumière laser, au moins un type choisi parmi le noir de carbone, le noir de titane, les oxydes métalliques, les sulfures métalliques, les nitrures métalliques, les oxalates métalliques et les carbonates métalliques.

6. Feuille transparente pour marquage laser selon l'une quelconque des revendications 1 à 5, dans laquelle la feuille monocouche contient un lubrifiant, ainsi qu'au moins un type choisi parmi un antioxydant et un anti-colorant, et au moins un type choisi parmi un agent absorbant les UV et un stabilisant à la lumière.

7. Feuille transparente pour marquage laser selon l'une quelconque des revendications 1 à 5, dans laquelle les couches de peau de la feuille multicouche contiennent un lubrifiant, ainsi qu'au moins un type choisi parmi un antioxydant et un anti-colorant, et au moins un type choisi parmi un agent absorbant les UV et un stabilisant à la lumière.

8. Feuille transparente pour marquage laser selon l'une quelconque des revendications 1 à 7, laquelle feuille transparente pour marquage laser est utilisée pour un passeport électronique.

9. Feuille transparente pour marquage laser selon l'une quelconque des revendications 1 à 7, laquelle feuille transparente pour marquage laser est utilisée pour une carte plastique.

10. Stratifié comprenant la feuille transparente pour marquage laser selon l'une quelconque des revendications 1 à 7, dans lequel
au moins une feuille imprimée est collée à la couche adhésive de la feuille transparente pour marquage laser, et
la feuille imprimée est imprimée par impression offset aux UV ou par sérigraphie aux UV.

11. Procédé de marquage laser pour marquer au laser la feuille transparente pour marquage laser selon l'une quelconque des revendications 1 à 9, dans lequel, après intégration de la feuille transparente pour marquage laser et d'une feuille imprimée soumise à une impression offset aux UV ou à une sérigraphie aux UV, une énergie de lumière laser est appliquée à un côté de la feuille transparente de marquage laser où la couche adhésive n'est pas formée, de façon que soient marqués au laser des lettres, des chiffres, des symboles ou des informations.
